(19) Europäisches Patentamt
European Patent Office
Office européen des brevets

(11) **EP 3 136 581 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(51) Int Cl.:
***H02M 7/483*** *(2007.01)*

(21) Anmeldenummer: **15182552.8**

(22) Anmeldetag: **26.08.2015**

(54) **MODULARER MEHRPUNKTSTROMRICHTER UND VERFAHREN ZUM BETREIBEN DESSELBEN**

MODULAR MULTILEVEL CONVERTER AND METHOD FOR OPERATING SAME

CONVERTISSEUR DE FREQUENCE MULTIPOINTS MODULAIRE ET SON PROCEDE DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.03.2017 Patentblatt 2017/09**

(73) Patentinhaber: **GE Energy Power Conversion Technology Ltd**
**Rugby**
**Warwickshire CV21 1BU (GB)**

(72) Erfinder:
• **Geske, Martin**
  **12277 Berlin (DE)**
• **Basic, Duro**
  **10969 Berlin (DE)**

(74) Vertreter: **Rüger Abel Patentanwälte PartGmbB**
**Patentanwälte**
**Webergasse 3**
**73728 Esslingen a. N. (DE)**

(56) Entgegenhaltungen:
**EP-A1- 2 782 239    US-A1- 2014 146 583**

• **ANTONIOS ANTONOPOULOS ET AL: "On dynamics and voltage control of the Modular Multilevel Converter", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541295, ISBN: 978-1-4244-4432-8**
• **ANDREJA RASIC ET AL: "Optimization of the modular multilevel converters performance using the second harmonic of the module current", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541462, ISBN: 978-1-4244-4432-8**

**Beschreibung**

Die vorliegende Erfindung betrifft einen modularen Mehrpunktstromrichter zur Umwandlung einer Wechselspannung in eine Gleichspannung oder umgekehrt und ein Verfahren zum Betreiben eines derartigen modularen Mehrpunktstromrichters.

Stromrichter zur Umwandlung von Gleichstrom in Wechselstrom und umgekehrt werden für viele Anwendungen, wie bspw. zur Kopplung elektrischer Netze mit drehzahlvariablen Antrieben, zum Energieaustausch zwischen zwei elektrischen Netzen und dgl. verwendet. Hierzu sind Stromrichter in unterschiedlichen Schaltungstopologien und Konfigurationen bekannt. Für kleinere und mittlere Leistungen sind konventionelle Stromrichter in Zweipunkttechnik bekannt, die einfache und robuste Lösungen bieten und weit verbreitet sind.

Mit fortwährender Entwicklung von Leistungshalbleiterschaltern werden stets neuere Stromrichtertopologien für immer höhere Leistungs- und Spannungsbereiche gewünscht und entwickelt. Im Mittel- und Hochspannungsbereich werden zunehmend sogenannte Mehrpunktstromrichter eingesetzt, um mehrere Spannungsstufen zu erzeugen und die Spannungen auf höhere Niveaus bis in Bereiche der Hochspannungsgleichstromübertragung (HGÜ) zu erhöhen.

Eine relativ neuartige Stromrichtertopologie stellt der modulare Mehrpunktstromrichter (Modular Multilevel Converter, MMC bzw. M2C) dar. Dieser Stromrichter weist Phasenmodule auf, die aus zwei in Reihe miteinander verbundenen Zweigen bestehen, wobei jeder Zweig aus einer Anzahl gleichartiger Zellen (Submodulen) aufgebaut ist. Jedes Submodul ist durch eine Brückenschaltung mit ansteuerbaren Leistungshalbleiterschaltern und einem internen Kondensator zur Zwischenspeicherung elektrischer Energie gebildet. Die Brückenschaltung kann eine Halbbrücke mit zwei in Reihe verbundenen, ansteuerbaren Leistungshalbleiterschaltern oder auch eine H- bzw. Vollbrücke sein, die zwei parallele, an den Zwischenkreis angeschlossene Leistungshalbleiterzweige aufweist, in denen jeweils zwei Leistungshalbleiterschalter in Reihe zueinander angeordnet sind. Jedem ansteuerbaren Schalter ist eine antiparallele Freilaufdiode zugeordnet. Durch die modulare Bauweise ist der Stromrichter für unterschiedliche Leistungen und Anwendungen individuell skalierbar. Die Spannungen und Ströme auf der AC-und DC-Seite können hochdynamisch und weitgehend entkoppelt voneinander gesteuert und geregelt werden.

Ein derartiger modularer Mehrpunktstromrichter ist bspw. aus der DE 101 03 031 A1 bekannt, wobei die Submodule nach Art einer Halbbrücke ausgebildet sind.

Modulare Mehrpunktstromrichter mit Submodulen in Form von asymmetrischen Voll- oder H-Brücken sind bspw. aus der DE 10 2010 046 142 A1 und DE 10 2011 086 087 A1 bekannt.

EP 1 497 911 B1 beschreibt weitere Submodulkonfigurationen, die sich zur Verwendung in modularen Mehrpunktstromrichtern eignen.

In der Praxis werden modulare Mehrpunktstromrichter in einem Betriebsmodus mit kontinuierlichem bidirektionalem Zweigstrom betrieben. In dem kontinuierlichen bidirektionalen Zweigstrombetrieb werden die Leistungshalbleiter der Submodule derart angesteuert, dass durch jeden Stromrichterzweig ein bidirektionaler, z.B. sinusförmiger Zweigstrom fließt. Der Zweigstrom kann eine Gleichstromkomponente haben, die von dem Gleichstrom in dem Gleichspannungszwischenkreis herrührt.

EP 2 782 239 A1 beschreibt einen modularen Mehrpunktstromrichter mit einer Anzahl von Stromrichterzweigen, die jeweils zwei in Reihe verbundene Submodule mit einer Brückenschaltung von Leistungshalbleiterschaltern aufweisen, und mit einer Steuereinrichtung zur Steuerung des Betriebs des Stromrichters. In jedem Stromrichterzweig ist ein passives Stromkontrollelement in Form einer Diode vorgesehen, die in Flussrichtung von einem Wechselspannungsanschluss zu einem positiven Gleichspannungsanschluss des Gleichspannungszwischenkreises bzw. von einem negativen Gleichspannungsanschluss des Gleichspannungszwischenkreises zu einem Wechselspannungsanschluss geschaltet ist, um den Stromfluss durch den entsprechenden Stromrichterzweig auf eine einzige Richtung zu begrenzen, so dass durch jeden Stromrichterzweig ein unidirektionaler, diskontinuierlicher Strom fließt.

US 2014/0146583 A1 beschreibt einen ähnlichen modularen Mehrpunktstromrichter, bei dem die Stromkontrollelemente zwischen den Wechselspannungsanschlüssen und den Gleichspannungszwischenkreisanschlüssen aktive Schalter sind, die derart angesteuert werden, dass in jedem Halbzyklus der Wechselspannung stets ein mit einem Pol der Zwischenkreisspannung verbundener Stromrichterzweig aktiviert ist, während der mit dem anderen Pol der Zwischenkreisspannung verbundene Stromrichterzweig deaktiviert ist, so dass durch jeden Stromrichterzweig ein unidirektionaler, diskontinuierlicher Strom während der jeweiligen Wechselspannungshalbwelle fließt.

Es besteht weiterhin der Bedarf daran, die durch einen modularen Mehrpunktstromrichter übertragbare Leistung zu erhöhen. Dies sollte möglichst ohne eine Erhöhung des Aufwands für die Schaltungsanordnung und die Steuerung des Stromrichters und bei hohen Wirkungsgraden des Stromrichters erfolgen. Umgekehrt besteht der Wunsch, bei einer gegebenen Nennleistung des Stromrichters die Anzahl der Submodule oder Leistungshalbleiter in diesen möglichst zu reduzieren bzw. die Leistungshalbleiterbauelemente besser auszunutzen.

Ausgehend hiervon ist es eine Aufgabe der vorliegenden Erfindung, einen modularen Mehrpunktstromrichter und ein Verfahren zum Betreiben desselben zu schaffen, die sich zur Übertragung hoher Leistungen bei hohen Wirkungsgraden eignen. Insbesondere ist es eine Aufgabe der vorliegenden Erfindung, einfache Maßnahmen vorzuschlagen, um bedarfsweise die übertragbare Leistung des Stromrichters zu erhöhen und/oder bei einer gegebenen übertragbaren Leistung die Anzahl der Submodule oder der Leistungshalbleiter zu verringern, möglichst ohne hierzu den schaltungstechnischen und/oder steuerungstechnischen Aufwand wesentlich zu vergrößern.

Diese Aufgabe wird durch einen modularen Mehrpunktstromrichter mit den Merkmalen des unabhängigen Anspruchs 1 und durch ein Verfahren zum Betreiben eines modularen Mehrpunktstromrichters mit den Merkmalen des unabhängigen Anspruchs 16 gelöst. Besonders vorteilhafte Ausführungsformen der Erfindung sind Gegenstand der Unteransprüche.

Gemäß einem Aspekt der Erfindung ist ein modularer Mehrpunktstromrichter zur Umwandlung einer Wechselspannung in eine Gleichspannung oder umgekehrt geschaffen, der eine Anzahl von Stromrichterzweigen bzw. -armen aufweist, wobei jeder Stromrichterzweig eine Anzahl von Submodulen enthält und wobei jedes Submodul durch eine Brückenschaltung mit wenigstens zwei Leistungshalbleiterschaltern gebildet ist. Der modulare Mehrpunktstromrichter weist ferner eine Steuereinrichtung zur Steuerung des Betriebs des Mehrpunktstromrichters auf, wobei die Steuereinrichtung eine Steuerlogik aufweist, die eingerichtet ist, um den Zweigstrom durch die Stromrichterzweige derart zu steuern bzw. zu regeln, dass durch die Stromrichterzweige jeweils ein Strom einer einzigen Polarität fließt. Der Zweigstrom einer einzigen Polarität ist ein unidirektionaler, kontinuierlicher, im Wesentlichen sinusförmiger Strom, der einen Mittelwert aufweist, der in etwa gleich oder größer als die Spitzenamplitude des Wechselanteils des Zweigstroms ist.

Der modulare Mehrpunktstromrichter weist also einen modularen Aufbau mit mehreren gleichartigen oder identischen Submodulen auf, der die diesem immanenten Vorteile der Modularität und Skalierbarkeit bietet. Zusätzlich ist die Steuereinrichtung dazu eingerichtet, die Zweigströme derart zu steuern, dass durch jeden Stromrichterzweig ein Strom einer einzigen Polarität fließt. Gemäß der Erfindung ist dies ein unidirektionaler bzw. unipolarer, kontinuierlicher, im Wesentlichen sinusförmiger Zweigstrom, dessen Mittelwert gleich oder größer als die Spitzenamplitude des Wechselanteils oder der Sinusform des Zweigstroms ist, so dass der Strom nur eine einzige, entweder positive oder negative Polarität aufweist. Hierbei können harmonische Anteile, insbesondere die 2. Harmonische, eines Kreisstroms berücksichtigt sein.

Die Unipolarität der Zweigströme kann durch Erhöhung des Gleichstromanteils der Zweigströme der Stromrichterzweige bewerkstelligt werden. Die Erhöhung des Gleichstromanteils hat dabei bei einer gleichbleibenden Anzahl von Submodulen pro Stromrichterzweig eine Erhöhung der übertragenen Leistung bzw. eine erhöhte Ausnutzung der Halbleiterbauelemente zur Folge. Umgekehrt kann bei gegebener zu übertragender Leistung und erhöhtem Gleichstromanteil des Zweigstroms die Zweigspannung reduziert werden, so dass die Anzahl der Submodule pro Stromrichterzweig verringert werden kann.

Jeder Stromrichterzweig weist vorzugsweise eine Reihenschaltung aus wenigstens zwei Submodulen auf, die derart zusammengeschaltet sind, dass ein erster Wechselspannungsanschluss wenigstens eines Submoduls mit einem zweiten Wechselspannungsanschluss eines benachbarten gleichartigen Submoduls elektrisch verbunden ist. Die Submodule bilden Zweipole, die in Reihe oder Kaskade zueinander geschaltet sind.

Der Stromrichter kann eine, zwei, vorzugsweise drei oder sogar mehr als drei Phasen mit entsprechender Anzahl von Phasenzweigen oder -modulen aufweisen, die zwischen einer positiven und einer negativen Zwischenkreisgleichspannungsklemme des Mehrpunktstromrichters angeschlossen sind. Jeder Phasenzweig enthält zwei miteinander in Reihe verbundene, identische oder gleichartige Stromrichterzweige, wobei ein Verbindungspunkt zwischen den beiden Stromrichterzweigen eines jeden Phasenzweigs mit einer Wechselspannungsklemme des Mehrpunktstromrichters verbunden ist. Jeder Stromrichterzweig kann ferner eine Induktivität zur Entkopplung des Stromrichterzweigs von anderen Stromrichterzweigen enthalten.

Die Submodule können unterschiedliche Konfigurationen aufweisen. Halbbrücken können jedoch aufgrund der unidirektionalen Spannungspolarität der Submodule hierin nicht eingesetzt werden. Bevorzugt werden Voll- oder H-Brückenschaltungen mit zwei parallelen Leistungshalbleiterzweigen, die zwischen einem ersten und einem zweiten Gleichspannungsknoten des Submoduls angeschlossen sind und in denen jeweils wenigstens ein ansteuerbarer Leistungshalbleiterschalter angeordnet ist, zu dem bevorzugterweise eine Freilaufdiode antiparallel geschaltet sein kann, aber nicht muss. Jedes Submodul weist ferner einen Kondensator auf, der parallel zu der H-Brückenschaltung zwischen dem ersten und dem zweiten Gleichspannungsknoten angeschlossen ist und zur Zwischenspeicherung von Energie als Gleichspannungszwischenkreiskondensator dient. Somit ist der Gleichspannungszwischenkreis des Mehrpunktstromrichters durch die Reihenschaltung der Gleichspannungszwischenkreiskondensatoren der Submodule gebildet. Die H-Brückenschaltung weist Wechselspannungsanschlüsse auf, die in der Schaltung des modularen Mehrpunktstromrichters mit benachbarten Submodulen verbunden sind, wobei zwischen den Wechselspannungsanschlüssen der H-Brückenschaltung jedes Submoduls in Abhängigkeit von dem Schaltzustand der Leistungshalbleiterschalter die positive oder negative Spannung des Kondensators oder die Spannung 0 anliegt.

In einer Ausführungsform weist jeder Leistungshalbleiterzweig einer H-Brückenschaltung zwei in Reihe verbundene Leistungshalbleiterschalter auf, denen jeweils eine antiparallele Freilaufdiode zugeordnet ist und deren Verbindungspunkte einen ersten bzw. zweiten Wechselspannungsanschluss des Submoduls bilden. Eine derartige H- oder Vollbrücke wird auch als symmetrische H-Brücke bezeichnet. Vorteilhafterweise brauchen, nachdem jeder Stromrichterzweig einen unipolaren Strom führt, von den vier Leistungshalbleiterschaltern jedes Submoduls nur zwei auf einer Brückendiagonale liegenden Schalter angesteuert zu werden, um alle erforderlichen Schaltzustände des Submoduls zum Betreiben des Stromrichters zu schaffen. Die anderen beiden Leistungshalbleiterschalter auf der anderen Brückendiagonale können ausgeschaltet bleiben, was die Schaltverluste gegenüber dem konventionellen Betrieb symmetrischer H-Brücken deutlich reduziert.

In einer anderen Ausführungsform kann das Submodul mit einer asymmetrischen oder reduzierten H- oder Vollbrücke geschaffen sein, die einen ersten Leistungshalbleiterzweig mit einer Reihenschaltung aus einem ersten Leistungshalbleiterschalter und einer ersten Diode sowie einen zweiten Leistungshalbleiterzweig mit einer Reihenschaltung aus einem zweiten Leistungshalbleiterschalter und einer zweiten Diode aufweist, wobei die erste und die zweite Diode in einer Brückendiagonale der Brückenschaltung angeordnet sind und jedem Leistungshalbleiterschalter eine antiparallele Freilaufdiode zugeordnet ist. Gegebenenfalls kann die Freilaufdiode auch weggelassen werden.

Bei Verwendung asymmetrischer H-Brücken kann durch Vorsehen kontinuierlicher unidirektionaler Zweigströme im Vergleich zu einem Betriebsmodus mit diskontinuierlichem Zweigstrom für die gleiche Nennleistung die Anzahl von Zellen bzw. Submodulen reduziert werden. Durch Verringerung der Gleichspannung des Gleichspannungszwischenkreises des Stromrichters ist für die gleiche Leistungsübertragung eine geringere Anzahl an Submodulen erforderlich. Umgekehrt können die H-Brücken, unabhängig davon, ob sie symmetrisch oder asymmetrisch ausgeführt sind, bei betragsmäßig erhöhten Zweigströmen für Überlastsituationen verwendet werden. Dies kann ohne zusätzliche Submodule und sogar unter Einsatz von lediglich zwei Leistungshalbleiterschaltern pro Submodul geschehen, sofern die Randbedingungen für eine erhöhte Leistungsübertragung erfüllt sind. Eine Erhöhung der Zwischenkreisgleichspannung des Mehrpunktstromrichters, um bei Bedarf die Leistungsübertragung zu steigern, würde hingegen mehr Submodule erfordern, was den Aufwand und die Kosten des Systems steigern würde. Auf der anderen Seite sind der Erhöhung der Zwischenkreisspannung auch technische Grenzen gesetzt, wie sie bspw. durch XLPE-Kabel vorgegeben werden, die derzeit häufig für die Hochspannungsgleichstromübertragung eingesetzt werden.

Um die Zweigströme geeignet zu steuern bzw. zu regeln, weist der modulare Mehrpunktstromrichter vorzugsweise eine Überwachungseinrichtung auf, die zur Überwachung wenigstens einer kennzeichnenden Größe eines Zweigstroms durch wenigstens einen Stromrichterzweig eingerichtet ist. Die Überwachung ermöglicht es, den Zweigstrom je nach gegebenen Betriebs- und Umgebungsbedingungen bedarfsweise dynamisch anzupassen.

In einer Ausführungsform ist die Überwachungseinrichtung dazu eingerichtet, den Zweigstrom in jedem Stromrichterzweig mit entsprechenden Strommesswandlern direkt zu messen. Daraus kann auf einfache Weise der erforderliche Gleichstrom-Offsetwert bzw. zusätzliche Gleichanteil berechnet werden, der erforderlich ist, um den Zweigstrom unidirektional zu machen.

In einer alternativen Ausführungsform ist die Überwachungseinrichtung dazu eingerichtet, einen Zwischenkreisgleichstrom und Phasenströme an allen Wechselspannungs-Phasenausgängen des Mehrpunktstromrichters zu messen. Letztere Messwerte sind auch für die Stromregelung des Mehrpunktstromrichters erforderlich. Da sich der Zwischenkreisgleichstrom auf alle Phasenzweige weitgehend gleichmäßig verteilen lässt, lässt sich aus diesen Größen leicht der Verlauf der jeweiligen Zweigströme bestimmen.

In einer besonders bevorzugten Ausführungsform weist die Steuereinrichtung eine Regeleinrichtung zur Regelung des Zweigstroms durch die Stromrichterzweige auf. Zur Regelung wird die von der Überwachungseinrichtung erfasste Größe herangezogen, die den Zweigstrom durch den wenigstens einen Stromrichterzweig kennzeichnet. Durch eine passende Regelung, bspw. eine Proportional-Integral(PI)-Regelung können stationäre Abweichungen der Ist-Zweigströme von den gewünschten Zweigströmen vermieden bzw. korrigiert werden. Außerdem kann das dynamische Verhalten, einschließlich des Störverhaltens, verbessert werden.

Die Steuereinrichtung kann den Zweigstrom durch eine Erhöhung des DC-Stromoffsets oder Gleichanteils des Zweigstroms oder des Zwischenkreisgleichstroms, bei Regelung z.B. des Sollwertes für diesen, auf einfache Weise steuern bzw. regeln.

In einer vorteilhaften Ausführungsform kann die Steuereinrichtung dazu eingerichtet sein, einen Kreisstrom der 2. Harmonischen einem Zweigstrom aktiv zu überlagern, um einen Betrieb mit unidirektionalem Zweigstrom zu erzielen und dabei gleichzeitig die Gleichspannung anzupassen und/oder die Verhältnisse zwischen wechsel- und gleichspannungsseitigen Strömen und Spannungen des Stromrichters zu modifizieren.

In einer weiteren vorteilhaften Ausführungsform kann die Steuereinrichtung dazu eingerichtet sein, einen Kreisstrom der 2. Harmonischen einem Zweigstrom zu überlagern, um einen Betrieb mit unidirektionalem Zweigstrom zu erzielen und dabei gleichzeitig die Rippelspannung von Gleichspannungszwischenkreiskondensatoren der Submodule zu minimieren.

Bei den zuletzt erwähnten vorteilhaften Ausführungsformen kann die Steuereinrichtung eine Reglereinheit zur Regelung der zu überlagernden Kreisströme der 2. Harmonischen aufweisen.

Gemäß einem weiteren Aspekt der Erfindung ist ein Verfahren zum Betreiben eines modularen Mehrpunktstromrichters, der eine Anzahl von Stromrichterzweigen mit jeweils einer Anzahl von Submodulen enthält, wobei jedes Submodul durch eine Brückenschaltung mit wenigstens zwei Leistungshalbleiterschaltern gebildet ist, geschaffen. Das Verfahren weist ein Ansteuern der Leistungshalbleiterschalter aller Submodule in Abhängigkeit von momentanen Betriebsbedingungen und gemäß einer vorgegebenen Modulation auf, um eine eingangsseitige Wechselspannung des Mehrpunktstromrichters in eine ausgangsseitige Gleichspannung oder umgekehrt umzuwandeln. Das Verfahren weist ferner ein Steuern bzw. Regeln der Zweigströme durch die Stromrichterzweige in einer derartigen Weise auf, dass durch die Stromrichterzweige jeweils ein Strom einer einzigen Polarität, also ein unidirektionaler, vorzugsweise kontinuierlicher, im Wesentlichen sinusförmiger Strom fließt, der einen Mittelwert aufweist, der in etwa gleich oder größer als die Spitzenamplitude des Wechselanteils des Zweigstroms ist, der somit stets nicht negativ (oder nicht positiv) ist. Dies unabhängig davon, ob die Submodul-Klemmenspannung positiv, negativ oder null ist. Das Verfahren weist die im Zusammenhang mit dem modularen Mehrpunktstromrichter oben erwähnten Weiterbildungen und Vorteile auf.

Das zuvor erwähnte Verfahren kann ferner ein Überwachen wenigstens einer einen Zweigstrom durch die Stromrichterzweige kennzeichnenden Größe aufweisen, wobei das Steuern bzw. Regeln der Zweigströme ein Regeln der Zweigströme in Abhängigkeit von der wenigstens einen überwachten Größe aufweisen kann. Durch die Regelung können Störungen und Betriebstransienten ausgeregelt und bleibende Abweichungen bei den Zweigströmen vermieden werden.

Das Steuern bzw. Regeln der Zweigströme kann auf der Basis einer Erhöhung eines DC-Stromsollwertes bzw. Gleichanteils eines Zweigstroms bzw. des Zwischenkreisgleichstroms erfolgen.

In vorteilhaften Ausführungsformen des Verfahrens kann das Steuern bzw. Regeln der Zweigströme auf der Basis einer aktiven Überlagerung eines Kreisstromes der 2. Harmonischen erfolgen, wobei gleichzeitig wenigstens eines der Folgenden bewirkt werden kann: Anpassung der Gleichspannung; Modifikation der Verhältnisse zwischen wechsel- und gleichspannungsseitigen Strömen und Spannungen des Stromrichters; und/oder Minimierung der Rippelspannung von Kondensatoren der Submodule.

Jedenfalls ist das Betriebsverfahren wie der modulare Mehrpunktstromrichter dazu eingerichtet, durch Erhöhung eines Gleichstrommittelwertes und des Effektivwertes der Gleichströme die übertragbare DC-Leistung zu erhöhen bzw. die Leistungshalbleiterbauelemente besser auszunutzen oder bei gleichbleibender übertragbarer Leistung die Spannung des Gleichspannungszwischenkreises und damit die Anzahl der erforderlichen Submodule zu reduzieren.

Weitere vorteilhafte Einzelheiten von Ausführungsformen der Erfindung ergeben sich aus Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:

Fig. 1 ein beispielhaftes System mit einem aus mehreren Submodulen aufgebauten modularen Mehrpunktstromrichter zur Kopplung eines elektrischen Energieversorgungsnetzes, einer elektrischen Maschine oder einer anderen Wechselspannungsquelle mit einem anderen Netz oder einer Last zur Verdeutlichung einer beispielhaften Anwendung der Erfindung, in Form eines vereinfachten Blockdiagramms;

Fig. 2 einen vereinfachten Schaltplan eines Stromrichter-Submoduls mit einer Vollbrückentopologie, das in dem modularen Mehrpunktstromrichter nach Fig. 1 gemäß der Erfindung verwendet werden kann;

Fig. 3 ein Ersatzschaltbild eines Phasenzweiges des modularen Mehrpunktstromrichters nach Fig. 1, in stark vereinfachter Prinzipdarstellung;

Fig. 4 einen beispielhaften Verlauf eines Zweigstroms beim herkömmlichen bidirektionalen Betriebsmodus;

Fig. 5a einen beispielhaften Verlauf eines Zweigstroms bei einem Betriebsmodus mit unidirektionalem diskontinuierlichem Zweigstrom, der als solcher nicht unter die beanspruchte Erfindung fällt;

Fig. 5b einen beispielhaften idealisierten Verlauf eines Zweigstroms bei einem erfindungsgemäßen Betriebsmodus mit unidirektionalem kontinuierlichem Zweigstrom, in stark vereinfachter Darstellung;

Fig. 6 das Submodul aus Fig. 2 unter zusätzlicher Veranschaulichung der Strompfade, die sich im Betrieb des Mehrpunktstromrichters gemäß der Erfindung für eine beispielhafte Stromrichtung ergeben;

Fig. 7 eine alternative Ausführungsform eines Submoduls in asymmetrischer H-Brücken-Bauweise zur Verwendung in dem modularen Mehrpunktstromrichter nach Fig. 1 gemäß der Erfindung;

Fig. 8 ein Blockschaltbild, das eine beispielhafte Regeleinrichtung zur Regelung der Zweigströme des Mehrpunktstromrichters gemäß der Erfindung veranschaulicht;

Fig. 9 ein erstes Implementierungsbeispiel für eine Regelungsstruktur zur Erzielung unipolarer Ströme und zusätzlicher Aspekte der Erfindung in Form eines vereinfachten Blockschaltbilds;

Fig. 10 einen beispielhaften Verlauf eines Zweigstroms bei einem erfindungsgemäßen Betriebsmodus mit kontinuierlichem Zweigstrom mit überlagerter 2. Harmonischen des Zweigstrom, in vereinfachter, idealisierter Darstellung;

Fig. 11 ein weiteres Implementierungsbeispiel für eine Regelungsstruktur zur Erzielung unipolarer Ströme und zusätzlicher Aspekte der Erfindung in Form eines vereinfachten Blockschaltbilds; und

Fig. 12 ein Flussdiagramm eines Verfahrens zum Betreiben eines modularen Mehrpunktstromrichters gemäß der Erfindung, in einer stark vereinfachten Prinzipdarstellung.

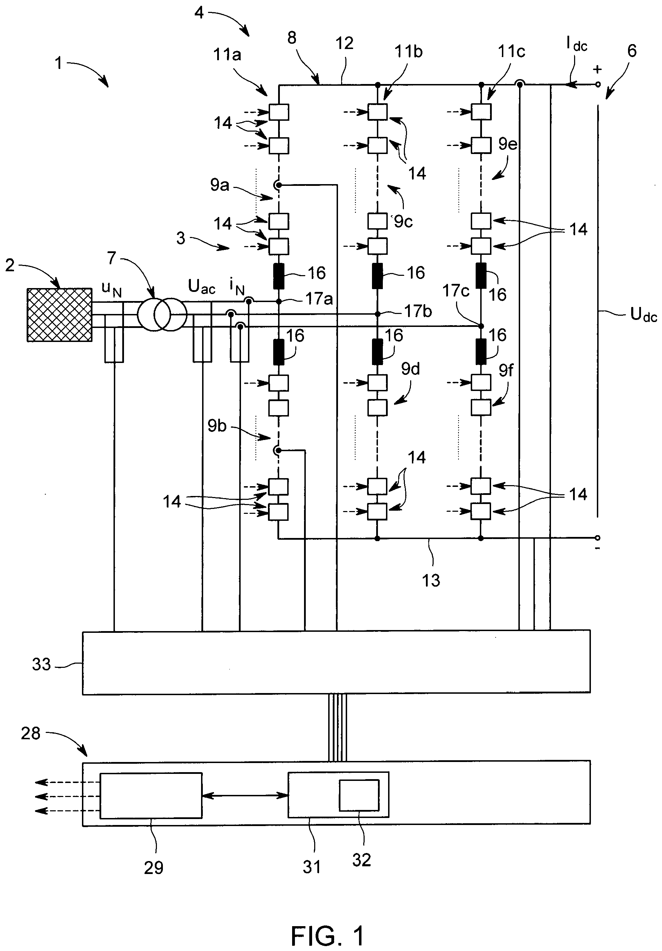

In Fig. 1 ist in einer vereinfachten Darstellung ein System 1 veranschaulicht, das sich für ein Hochspannungsgleichstrom-Verteilungssystem zur elektrischen Energieübertragung bei hoher Gleichspannung oder für viele andere Anwendungen eignet. Das System 1 umfasst eine hier bspw. dreiphasige Wechselspannungsquelle 2, die z.B. ein elektrisches Energieversorgungsnetz, eine elektrische Wechselstrom(AC)-Maschine, ein AC-Generator, eine Windkraftanlage oder dgl. sein kann. An die Wechselspannungsquelle 2 ist mit seiner Wechselspannungsseite 3 ein elektrischer Umrichter 4 angeschlossen, dessen Gleichspannungsseite 6 über eine hier nicht näher dargestellte Gleichstromübertragungseinrichtung mit einem anderen elektrischen Energieversorgungsnetz oder elektrischem Umrichter ähnlich oder gleich 4 verbunden sein kann. Der Anschluss des Umrichters 4 an die Wechselspannungsquelle 2 kann optional über einen Transformator 7 erfolgen.

Der Umrichter 4 weist wenigstens einen ersten Stromrichter 8 auf, der hier ein Gleichrichter sein kann, um eine Wechselspannung $u_N(t)$ der Wechselspannungsquelle 2 in eine ausgangsseitige Gleichspannung $U_{dc}$ zu wandeln. Optional könnte der Umrichter 4 einen hier nicht dargestellten weiteren Stromrichter aufweisen, der die Spannung $U_{dc}$ in eine für ein anderes Netz oder einen elektrischen Antrieb passende Wechselspannung wandelt oder dem ersten Stromrichter 8 parallel geschaltet ist. Es versteht sich, dass sich die Funktionen der Stromrichter umkehren, wenn der Energiefluss umgekehrt zu dem Energieversorgungsnetz oder der Spannungssenke 2 hin erfolgt.

Wie aus Fig. 1 ersichtlich, weist der Stromrichter 8 hier sechs Stromrichterzweige 9a-9f auf, von denen jeweils zwei, ein oberer und ein unterer 9a, 9b bzw. 9c, 9d bzw. 9e, 9f einen jeweiligen Phasenzweig 11a, 11b bzw. 11c bilden. Jeder Phasenzweig 11a, 11b, 11c erstreckt sich zwischen einer positiven Stromschiene bzw. einem positiven Gleichspannungsanschluss ("+") 12 des Stromrichters 8 und einer negativen Stromschiene bzw. einem negativen Gleichspannungsanschluss ("-") 13.

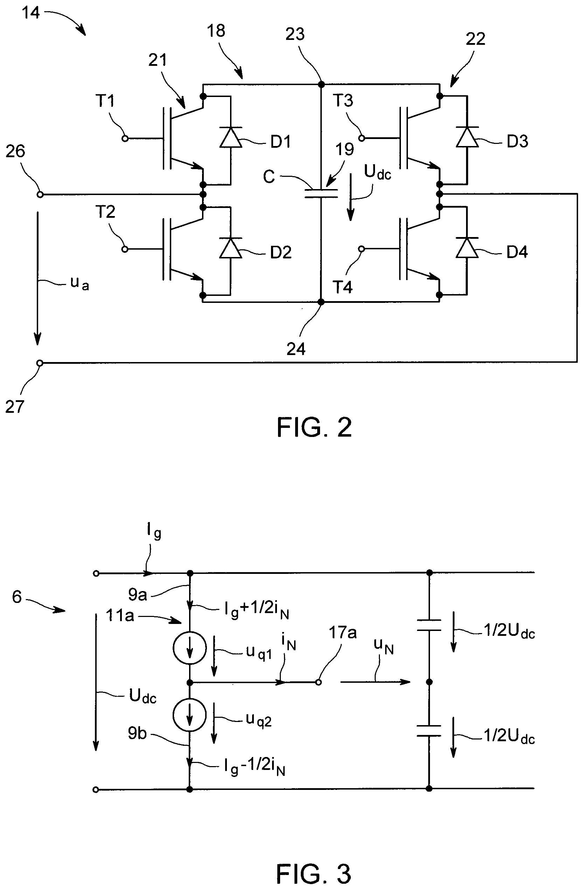

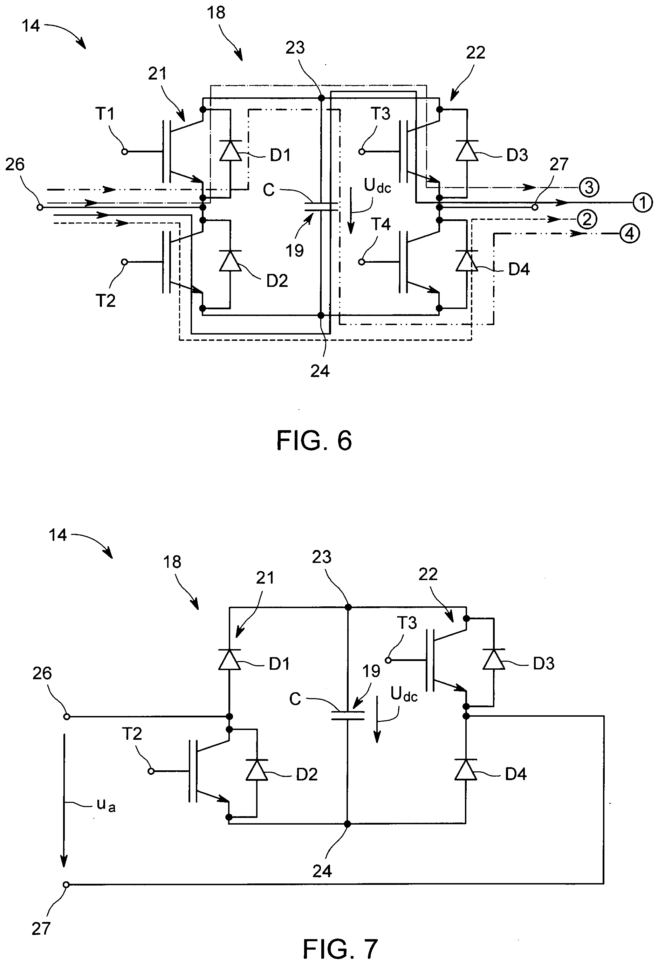

Wie ferner aus Fig. 1 ersichtlich, weist jeder Stromrichterzweig hier eine Reihenschaltung aus mehreren in Reihe geschalteten Stromrichter-Submodulen oder modularen Schaltern 14 auf. Die steuerbare Gleichspannung $U_{dc}$ an den Gleichspannungsanschlüssen 12, 13 des Stromrichters 8 kann über die Schaltzustände der einzelnen Stromrichter-Submodule 14 dynamisch verändert werden. Die Anzahl der Stromrichter-Submodule 14 bestimmt dabei die verfügbare Anzahl von Stromrichter-Schaltzuständen, die eine feine Spannungsstufung und eine Spannungsform hoher Güte sowie hohe Spannungsniveaus bis auf Hochspannungs-Gleichspannungs-Übertragungs(HGÜ)-Niveaus ermöglichen. Bei dem Stromrichter 8 handelt es sich somit um einen modularen Multi-Level- oder Mehrpunktstromrichter. Die Submodule 14 sind nachstehend im Zusammenhang mit den Figuren 2 und 7 näher erläutert.

In den Stromrichterzweigen 9a-9f können jeweils kreisstrombegrenzende Induktivitäten 16 vorgesehen sein, die eine Entkopplung der Stromrichterzweige voneinander unterstützen. An dem Verbindungspunkt zwischen den zugehörigen Stromrichterzweigen 9a, 9b bzw. 9c, 9d bzw. 9e, 9f sind die jeweiligen Wechselspannungsanschlüsse 17a, 17b, 17c des Stromrichters 8 herausgeführt, die mit der Wechselspannungsquelle 2 verbunden sind. Die gleichspannungsseitigen Anschlüsse der ersten, obersten Submodule 14 des Stromrichters 8 sind miteinander und mit der positiven Stromschiene 12 verbunden. Ähnlich sind die gleichspannungsseitigen Anschlüsse der letzten, untersten Submodule 14 miteinander und mit der negativen Stromschiene 13 verbunden. Zwischen den Stromschienen 12, 13 liegt die Gleichspannung $U_{dc}$ an, die eine Hochspannung von bspw. über 100 kV sein kann.

Fig. 2 zeigt in Form eines vereinfachten Schaltplans eine an sich bekannte Topologie eines Submoduls oder modularen Schalters 14, wie er in dem Mehrpunktstromrichter 8 der in Fig. 1 gezeigten Art verwendet werden kann.

Das bidirektionale Submodul 14 gemäß Fig. 2 weist eine Brückenschaltung 18 und einen zu der Brückenschaltung 18 parallel geschalteten Kondensator C, 19 auf. Die Brückenschaltung 18 ist hier als sogenannte symmetrische H- oder Vollbrücke mit zwei parallelen Leistungshalbleiterzweigen 21, 22 ausgebildet, die zwischen einem ersten und einem zweiten Gleichspannungsknoten 23, 24 parallel zueinander angeschlossen sind. Der erste Leistungshalbleiterzweig 21 weist eine Reihenschaltung aus einem ersten Leistungshalbleiterschalter T1 und einem zweiten Leistungshalbleiterschalter T2 auf, wobei dem ersten und dem zweiten Leistungshalbleiterschalter T1, T2 jeweils eine antiparallele bzw. gegensinnig parallel geschaltete Freilaufdiode D1 bzw. D2 zugeordnet ist. Die Freilaufdioden D1, D2 dienen dazu, bei ausgeschaltetem Leistungshalbleiterschalter T1 bzw. T2 Betriebsstrom zu führen und den zugehörigen Leistungsschalter gegen unzulässige Über- bzw. Sperrspannungen zu schützen.

In ähnlicher Weise weist der zweite Leistungshalbleiterzweig 22 eine Reihenschaltung aus einem dritten und einem vierten Leistungshalbleiterschalter T3, T4 auf, denen jeweils eine Freilaufdiode D3 bzw. D4 antiparallel geschaltet ist. Die Freilaufdioden D3, D4 erfüllen die gleiche Funktion wie die Freilaufdioden D1, D2.

Die Leistungshalbleiterschalter T1-T4 sind steuerbare Schalter, die hier vorteilhafterweise durch IGBTs (Bipolartransistoren mit isolierter Gate-Elektrode) gebildet sind. Prinzipiell könnten aber auch andere Transistoren, wie bspw. Feldeffekttransistoren, insbesondere MOSFETs, Gate-Turn-Off(GTO)-Thyristoren, IGC-Thyristoren (Integrated Gate-Commutated Thyristors, IGCTs) und andere vergleichbare schaltbare elektronische Bauelemente eingesetzt werden. Die hier verwendeten Bezeichnungen Kollektor, Emitter und Gate-Elektrode beziehen sich auf die bevorzugte Verwendung von IGBTs als die Leistungshalbleiterschalter T1-T4 der Brückenschaltung 18, wobei für den Fachmann die entsprechenden Bezeichnungen für Anschlüsse und Elektroden anderer vergleichbarer Halbleiterbauelemente ohne weiteres geläufig sind.

Wie aus Fig. 2 ersichtlich, ist der Emitter des ersten Leistungshalbleiterschalters T1 mit dem Kollektor des zweiten Leistungshalbleiterschalters T2 verbunden, wobei der Verbindungspunkt einen ersten Wechselspannungsanschluss 26 des Submoduls 14 bildet, der wahlweise ein Eingangs- oder Ausgangsanschluss sein kann. Ebenso ist der Emitter des dritten Leistungshalbleiterschalters T3 mit dem Kollektor des vierten Leistungshalbleiterschalters T4 verbunden, wobei der Verbindungspunkt einen zweiten Wechselspannungsanschluss 27 des Submoduls 14 bildet, der wahlweise ein Eingangs- oder Ausgangsanschluss sein kann.

Zu den beiden parallel geschalteten Reihenschaltungen bzw. Leistungshalbleiterzweigen 21, 22 ist der als Energiespeicher 19 dienende Kondensator C parallel geschaltet, der auch als Gleichspannungszwischenkreiskondensator des Submoduls 14 bezeichnet werden kann. Die Gleichspannung $u_{dc}$ an dem Kondensator C ist aufgrund der Schaltung der Freilaufdioden D1-D4 stets positiv und kann je nach Bemessung und Anwendung bspw. zwischen einigen hundert Volt und einigen kV betragen. Die Klemmenspannung $u_a$ zwischen den AC-Anschlüssen 26, 27 des Submoduls 14 kann im Wesentlichen die Werte $-u_{dc}$, $+u_{dc}$ oder 0 annehmen. Die Gleichspannung $u_{dc}$ an dem Kondensator C kann größer oder kleiner werden. Ein Strom kann durch das Submodul 14 prinzipiell in beide Richtungen, also von dem Anschluss 26 zu dem Anschluss 27 oder umgekehrt von dem Anschluss 27 zu dem Anschluss 26 fließen. Wie nachstehend im Einzelnen erläutert, werden die Submodule 14 erfindungsgemäß geeignet angesteuert, damit durch jedes Submodul 14 in dem modularen Mehrpunktstromrichter 8 nach Fig. 1 stets ein unidirektionaler, also lediglich eine einzige Polarität aufweisender, vorzugsweise kontinuierlicher Strom, bspw. ein entweder positiver oder negativer im Wesentlichen sinusförmiger Strom in lediglich eine Richtung, bspw. von dem Anschluss 26 zu dem Anschluss 27, fließt.

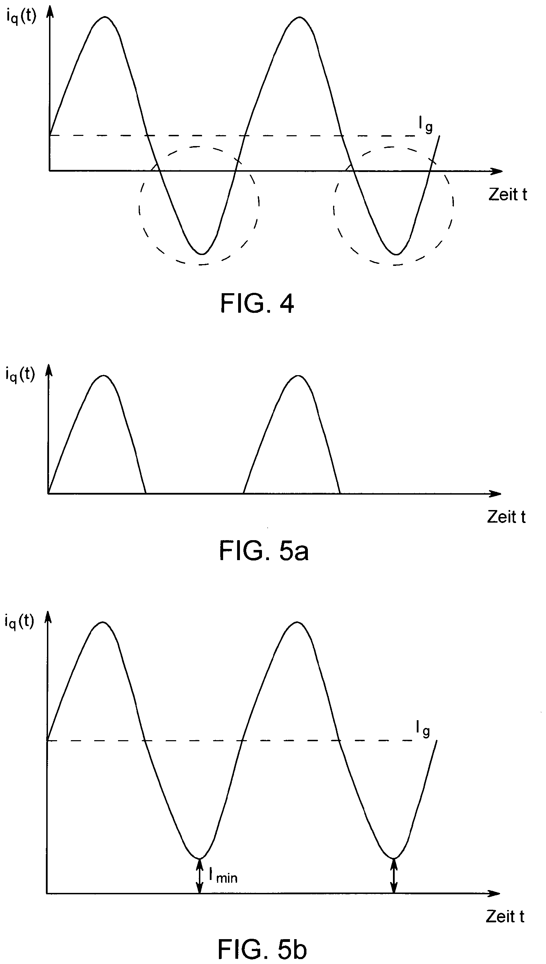

Erneut bezugnehmend auf Fig. 1 ist ferner eine Steuereinrichtung 28 ersichtlich, die dazu vorgesehen ist, auf der Basis der momentanen Betriebsbedingungen den Betrieb des Stromrichters 8 geeignet zu steuern. Die Steuerungspfade sind in Fig. 1 der Übersichtlichkeit wegen nur an wenigen Stellen durch gestrichelte Pfeile angedeutet. Insbesondere steuert die Steuereinrichtung 28 mittels einer Ansteuereinrichtung 29 die Leistungshalbleiterschalter T1-T4 der Submodule 14 aller Stromrichterzweige 9a-f geeignet an, um aus der Netzspannung $u_N(t)$ bzw. deren Transformierten an den Wechselspannungsanschlüssen 17a-c eine gewünschte Gleichspannung $U_{dc}$ zwischen den Gleichspannungsanschlüssen 12, 13 des Stromrichters 8 zu erzeugen oder umgekehrt. Die hierzu geeigneten Schaltsignale $s(t)$ werden von einer zugehörigen Steuerlogik 31 bestimmt, die je nach Konfiguration auch eine Regeleinrichtung 32 zur Regelung der Zweigströme durch die Stromrichterzweige 9a-f enthalten kann. Die Steuereinrichtung 28 mit ihren Funktionsblöcken 29, 31 und 32 ist in größeren Einzelheiten nachstehend im Zusammenhang mit den Figuren 4 bis 11 näher beschrieben.

Die Steuereinrichtung 28 steuert den Betrieb des Stromrichters 8 in Abhängigkeit von Parametern, die von einer Überwachungseinrichtung 33 im Betrieb laufend gemessen bzw. bestimmt werden. In Fig. 1 sind beispielhafte Messpfade dargestellt, obwohl aus Übersichtlichkeit einige weggelassen wurden. Wie dargestellt, können bspw. alle Phasen der Netzspannung $u_N(t)$ und/oder, wenn ein Transformator 7 eingesetzt wird, die Phasenspannungen an den Wechselspannungsanschlüssen 17a-c gemessen werden. Ferner können die Phasenströme an den Wechselspannungsanschlüssen 17a-c direkt gemessen werden. Noch weiter werden vorzugsweise die Zweigströme $i_q(t)$ in den Stromrichterzweigen 9a-f und/oder der Zwischenkreisstrom $I_{dc}$ mit entsprechenden Stromwandlern direkt gemessen. Ferner werden die Potentiale an den Gleichspannungsanschlüssen 12, 13 erfasst, um die Spannung $U_{dc}$ des Gleichspannungszwischenkreises zu bestimmen. Es können andere Größen, als hier angegeben, gemessen werden, und manche Größen können aus anderen Größen mit allgemeinen bekannten Beziehungen für elektrische Ströme und Spannungen bestimmt werden.

Zum Verständnis der Funktionsweise des erfindungsgemäßen modularen Mehrpunktstromrichters 8 wird zunächst auf Fig. 3 Bezug genommen, die ein Ersatzschaltbild eines Phasenzweigs aus den Phasenzweigen 11a-c zeigt, wobei hier lediglich als ein Beispiel der Phasenzweig 11a mit dem oberen Stromrichterzweig 9a und dem unteren Stromrichterzweig 9b betrachtet wird. Wie zu sehen, können die Submodule 14 eines Zweiges bei entsprechender, idealer Ansteuerung summarisch durch ideale gesteuerte Spannungsquellen $u_{q1}$, $u_{q2}$ ersetzt werden. Beide Spannungsquellen $u_{q1}$, $u_{q2}$ werden symmetrisch belastet. Die Spannung $U_{dc}$ zwischen den Gleichspannungsanschlüssen 12, 13 wird als konstant angenommen und verteilt sich gleichmäßig auf die Reihenschaltung der Kondensatoren C, 19 in dem oberen und dem unteren Stromrichterzweig 9a, 9b. Die maximal einstellbare Spannungsamplitude û_N eines Phasenmoduls bezieht sich somit auf $\frac{1}{2}U_{dc}$.

Der Strom in einem Stromrichterzweig 9a-f, also in der Spannungsquelle $u_{q1}$, $u_{q2}$, ist die Summe aus dem Gleichstromanteil $I_g$ in dem Phasenmodul 11a-c und dem halben Wechselstromanteil $\frac{1}{2}i_N(t)$. Bei symmetrischer Auslegung fließt somit bspw. durch den oberen Stromrichterzweig 9a der Strom $I_g + \frac{1}{2}i_N(t)$, während durch den unteren Stromrichterzweig 9b der Strom $I_g - \frac{1}{2}i_N(t)$ fließt.

Die Anzahl der benötigten Submodule 14 pro Stromrichterzweig 9a-f ist durch die maximale Zweigspannung

$$\hat{U}_q \; = \; \sqrt{2} \cdot U_N \; + \; \tfrac{1}{2} \cdot U_{dc} \qquad\qquad \text{(Gl. 1),}$$

wobei $U_N$ der Effektivwert der Wechselspannung $u_N(t)$ ist, und die Gleichspannung der Zwischenkreiskondensatoren C, 90 der Submodule 14, $u_{DC}$, wie folgt definiert:

$$N_q = ceil(\hat{U}_q / u_{dc}) \qquad\qquad \text{(Gl. 2),}$$

wobei *ceil*(x) die Aufrundungsfunktion ist, die der reellen Zahl x die nächstliegende nicht kleinere ganze Zahl zuordnet.

Die übertragene Gleichspannungsleistung $P_{dc} = U_{dc} \cdot I_{dc}$ entspricht der entnommenen Wechselspannungsleistung $P_{ac}$, so dass bei einem n-phasigen Stromrichter die folgende Beziehung (Leistungsbilanzgleichung) gilt:

$$^n/_2 \cdot \hat{U}_N \cdot \hat{I}_N \; = \; U_{dc} \cdot I_{dc} \qquad\qquad \text{(Gl. 3).}$$

Zum weiteren Verständnis der Funktionsweise des erfindungsgemäßen modularen Mehrpunktstromrichters 8 wird auf die Figuren 4 und 5 Bezug genommen. Fig. 4 veranschaulicht einen herkömmlichen Betriebsmodus, bei dem der Zweigstrom $i_q(t)$ ein kontinuierlicher, bidirektionaler, im Wesentlichen sinusförmiger Strom ist. Dieser Strom ist, wie bereits im Zusammenhang mit Fig. 3 vorstehend erläutert, die Summe aus einem Gleichstromanteil $I_g$ in dem Phasenzweig 11a-c und dem halben Wechselstromanteil $\frac{1}{2}i_N(t)$. Der Gleichstromanteil $I_g$ entspricht bei einem n-phasigen Stromrichter 8 einem n-tel des Gleichstroms $I_{dc}$ in dem Gleichspannungszwischenkreis. Wie ersichtlich, ist der Zweigstrom $i_q(t)$ über einen Zeitraum, der größer ist als die halbe Periodendauer des Wechselstromanteils, positiv und in dem verbleibenden Zeitraum der Periode negativ, wie in Fig. 4 mit einem gestrichelten Kreis angezeigt.

Fig. 5a zeigt einen nicht erfindungsgemäßen diskontinuierlichen Betriebsmodus, der einer Halbwellengleichrichtung ähnlich ist. Es ist stark vereinfacht, unter Weglassung der entstehenden Harmonischen und sonstigen Störsignale ein Zweigstrom $i_q(t)$ im Verlauf der Zeit t veranschaulicht. Wie ersichtlich, leitet bspw. der Stromrichterzweig 9a, 9c, 9e, der mit dem positiven Gleichspannungsanschluss 12 verbunden ist, die positive Halbwelle des Stromrichterstroms, während der Zweigstrom für den Zeitraum der negativen Halbwelle null ist. Entsprechend leitet der Stromrichterzweig 9b, 9d, 9f, der mit dem negativen Überspannungsanschluss 13 verbunden ist, die negative Halbwelle des Stromrichterstroms, während der Zweigstrom während der positiven Halbwelle null ist. Deshalb wird dieser Betriebsmodus auch als diskontinuierlicher Strombetriebsmodus bezeichnet. Durch geeignete Ansteuerung der Leistungshalbleiterschalter T1-T4 in den Submodulen 14 der oberen Stromrichterzweige 9a, 9c, 9e bzw. der unteren Stromrichterzweige 9b, 9d, 9f kann bewirkt werden, dass durch jeden Stromrichterzweig 9a-9f stets ein diskontinuierlicher unipolarer Strom in etwa in einer Halbwelle fließt. Vorteilhafterweise müssen hier nur 2 der 4 Leistungshalbleiterschalter T1-T4, also entweder T1, T4 oder T2, T3, angesteuert werden, um diesen diskontinuierlichen unidirektionalen Strombetriebsmodus zu implementieren. Wie jedoch aus Fig. 5a ersichtlich, sind im Vergleich zu den relativ hohen Spitzenwerten der Zweigströme die Effektivwerte relativ niedrig. Die übertragbare Leistung des Stromrichters 8 ist somit begrenzt bzw. die Halbleiterschalter T1-T4 werden nur unzureichend ausgenutzt, weshalb der nachfolgend erläuterte kontinuierliche Betriebsmodus gemäß der Erfindung nach Fig. 5b bevorzugt wird.

Fig. 5b zeigt einen kontinuierlichen unidirektionalen Strombetriebsmodus gemäß der Erfindung. Wie veranschaulicht, wird der Zweigstrom $i_q(t)$ durch die Steuerlogik 31 der Steuereinrichtung 28 derart gesteuert bzw. geregelt, dass der Zweigstrom $i_q(t)$ kontinuierlich und stets entweder positiv (oder zumindest nicht-negativ) oder negativ (oder zumindest nicht-positiv) ist. Dies wird dadurch erreicht, dass der Gleichstromanteil $I_g$ des Zweigstroms $i_q(t)$ im Wesentlichen auf einen Wert eingestellt wird, der größer oder gleich der maximalen Amplitude $\hat{I}_N$ des Wechselstromanteils $i_N(t)$ ist. Dies bedeutet, dass die Steuereinrichtung 28 im Betrieb den Gleichstrom $I_{dc}$ des Gleichspannungszwischenkreises derart erhöht, dass sich in allen Stromrichterzweigen 9a-f ein kontinuierlicher unidirektionaler Zweigstrom $i_q(t)$ ergibt, der lediglich eine einzige Polarität aufweist. Wie in Fig. 5b veranschaulicht, kann der Gleichstromanteil $I_g$ vorzugsweise derart eingestellt werden, dass der Zweigstrom $i_q(t)$ stets betragsmäßig um mindestens einen gewünschten Betrag $I_{min}$

größer als 0 ist.

Durch Erhöhung des Gleichstromanteils $I_g$ der Zweigströme in den Stromrichterzweigen 9a-f, so dass der Zweigstrom seine Polarität nie ändert, kann vorteilhafterweise ohne Modifikation der leistungselektronischen Schaltung, allein durch eine geeignete Steuerlogik 31 bei gleichbleibender Anzahl von Submodulen ($N_q$) die übertragene Leistung erhöht werden, indem die entsprechenden Bedingungen am Anschlusspunkt des Stromrichters 8 geschaffen werden. Dies ist insbesondere dann von Vorteil, wenn die maximale Spannung $U_{dc}$ des Gleichspannungszwischenkreises begrenzt ist, wie dies bspw. bei Hochspannungs-Gleichspannungs-Übertragungskabeln der Fall ist, bei denen die maximal übertragbare Gleichspannung aufgrund von Technologiebeschränkungen aktuell auf $\pm 320\ kV_{dc}$ beschränkt ist.

Außerdem wird durch die erfindungsgemäße Maßnahme vorteilhafterweise die Spannung des Gleichspannungszwischenkreises nicht erhöht, um die übertragbare Leistung zu erhöhen. Eine höhere Spannung des Gleichspannungszwischenkreises des Stromrichters 8 würde mehr Submodule 14 erfordern, was den Schaltungs- und Ansteuerungsaufwand mit den zugehörigen Kosten steigern würde.

Ein noch weiterer Vorteil der Erfindung liegt darin, dass lediglich zwei der vier Leistungshalbleiterschalter, z.B. IGBTs T1-T4, des Submoduls 14 (wie in Fig. 2 veranschaulicht) erforderlich sind bzw. angesteuert werden müssen, um den kontinuierlichen unipolaren Zweigstrom $i_q(t)$ und bipolare Klemmenspannungen unter Verwendung von H-Brücken zu realisieren. Dies ist auch aus Fig. 6 ersichtlich, die das Submodul nach Fig. 2 wiedergibt und in der zusätzlich die sich für den kontinuierlichen unidirektionalen Strombetriebsmodus ergebenden Zweigstrompfade für eine beispielhafte Stromflussrichtung von dem ersten 26 zu dem zweiten 27 Wechselspannungsanschluss veranschaulicht sind.

Bezug nehmend auf Fig. 6 fließt der Strom in dem Submodul 14, der dem Zweigstrom $i_q(t)$ entspricht, für den Fall, dass die Leitungshalbleiterschalter T2, T3 beide eingeschaltet bzw. geschlossen sind, von dem Wechselspannungsanschluss 26 über den geschlossenen Schalter T2, den Kondensator C und den geschlossenen Schalter T3 zu dem Anschluss 27, wie durch den mit durchgezogener Linie eingezeichneten Strompfad (1) veranschaulicht. Die Klemmenspannung $u_a$ zwischen dem Anschluss 26 und dem Anschluss 27 beträgt $-u_{dc}$.

Falls der Schalter T2 eingeschaltet und der Schalter T3 ausgeschaltet ist, fließt der Submodulstrom bzw. Zweigstrom von dem Anschluss 26 über den geschlossenen Schalter T2 und die zu dem Schalter T4 antiparallele Freilaufdiode D4 zu dem Anschluss 27, wie durch den gestrichelten Strompfad (2) veranschaulicht. Die Klemmenspannung $u_a$ ist gleich null.

Alternativ kann der Schalter T2 ausgeschaltet und der Schalter T3 eingeschaltet werden. Der Zweigstrom fließt dann von dem Anschluss 26 über die zu dem Schalter T1 antiparallele Freilaufdiode D1 und den geschlossenen Schalter T3 zu dem Wechselspannungsanschluss 27 wieder in der gleichen Richtung. Dieser Strompfad ist mit strichpunktierter Linie (3) veranschaulicht. Die Klemmenspannung $u_a$ ist gleich null.

Schließlich ist für eine Phase, in der beide Schalter T2 und T3 ausgeschaltet sind, der Strompfad (4) mit einer punktierten Linie in Fig. 6 veranschaulicht, wobei der Zweig- bzw. Submodulstrom von dem Anschluss 26 über die zu dem Schalter T1 antiparallele Freilaufdiode D1, den Kondensator C, 19 und die zu dem Schalter C4 antiparallele Diode D4 zu dem Wechselspannungsanschluss 27 fließt. Die Klemmenspannung $u_a$ beträgt $+u_{dc}$.

Insofern brauchen die Leistungshalbleiterschalter T1, T4 zur Realisierung des kontinuierlichen unidirektionalen Zweigstroms $i_q(t)$ gemäß der Erfindung, wie in Fig. 5b veranschaulicht, nicht angesteuert zu werden. Dies reduziert den Ansteuerungsaufwand und die Schaltverluste.

Außerdem ermöglicht die Erfindung eine Reduktion der Schaltungskomplexität. Die für die Ansteuerung nicht erforderlichen Leistungshalbleiterschalter T1, T4 können weggelassen werden. Dies ergibt ein für den Mehrpunktstromrichter 8 verwendbares Submodul 14', das die Konfiguration einer reduzierten oder asymmetrischen H-Brücke aufweist, wie in Fig. 7 dargestellt. Das Submodul 14' nach Fig. 7 unterscheidet sich von demjenigen gemäß den Figuren 2 und 6 dadurch, dass hier in einer H-Brückendiagonale anstelle der Leistungshalbleiterschalter T1, T4 mit zugehörigen Freilaufdioden nun lediglich die Dioden D1 und D4 vorgesehen sind. Selbstverständlich können je nach Schaltungskonfiguration, Anschluss der Submodule und Einsatz als Gleich- oder Wechselstromrichter anstelle des Paars Leistungshalbleiterschalter T1, T4 die Leistungshalbleiterschalter T2, T3 auf der anderen Brückendiagonale weggelassen werden. Jedenfalls können teure Leistungshalbleiterelemente gemeinsam mit zugehörigen, hier nicht näher veranschaulichten Ansteuereinheiten bzw. Gate-Treibern eingespart werden. Der Schaltungsaufwand, der Ansteuerungsaufwand, die Herstellungs- und Betriebskosten werden reduziert.

Wie bereits vorstehend erläutert, steuert die Steuereinrichtung 28 den Betrieb des Stromrichters 8 in Abhängigkeit von durch die Überwachungseinrichtung 33 gemessenen bzw. bestimmten Betriebsgrößen. Hierbei gibt die Steuerlogik 31 auch die Zweigströme geeignet vor und bestimmt die hierzu erforderliche Schaltfunktion s(t), die die Ansteuereinrichtung 29 zur Ansteuerung der Leistungshalbleiterschalter T1-T4 der Submodule 14, 14' verwendet. Die Steuerlogik 31 kann den Zweigstrom $i_q(t)$ durch die Stromrichterzweige 9a-f unter Verwendung einer offenen Steuerstrecke steuern, indem sie einen hinreichenden Gleichstromanteil $I_g$ des Zweigstroms bei bekanntem Wechselstromanteil $\frac{1}{2}i_N(t)$ festlegt und daraus die je nach verwendetem Modulationsverfahren erforderliche Schaltfunktion bzw. das stationäre Tastverhältnis bestimmt.

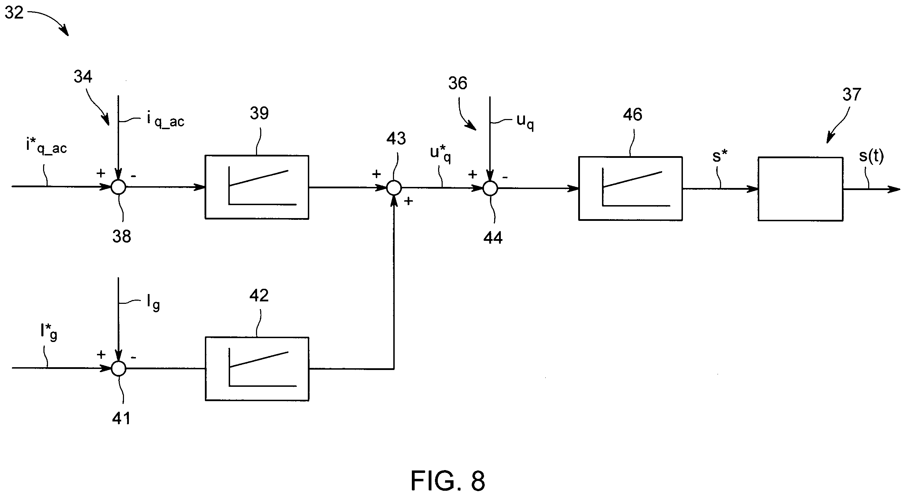

In einer bevorzugten Ausführungsform wird der Zweigstrom $i_q(t)$ aber mit einem geschlossenen Regelkreis passend geregelt. Hierzu weist die Steuerlogik 31 die Regeleinrichtung 32 auf, die dazu eingerichtet ist, anhand der durch die Überwachungseinrichtung bestimmten Größen, die Zweigströme in den Stromrichterzweigen 9a-f kennzeichnen, die Zweigströme $i_q(t)$ durch die Stromrichterzweige 9a-f zu regeln. Ein stark vereinfachtes Blockschaltbild einer möglichen Regeleinrichtung 32 ist in Fig. 8 veranschaulicht.

Wie aus Fig. 8 ersichtlich, weist die Regeleinrichtung 32 hier eine Stromregeleinheit 34, eine Spannungsregeleinheit 36 und eine Modulationseinheit 37 auf. Die Stromregeleinheit 34 bestimmt zunächst mit einem Addierer 38 die Differenz zwischen dem Sollwert $i^*_{q\_ac}$ und dem Istwert $i_{q\_ac}$ des Wechselstromanteils des Zweigstroms und fügt diese Abweichung als Führungsgröße einem Regler, vorzugsweise einem Proportional-Integral(PI)-Regler 39, zu. Ferner wird die Abweichung zwischen dem Sollwert $I^*_g$ und dem Istwert $I_g$ des Gleichstromanteils des Zweigstroms $i_q(t)$ mit einem weiteren Addierer 41 bestimmt und einem weiteren Regler 42 zugeführt. Die Ausgangssignale der Regler 39, 42 werden mit einem Addierer 43 aufsummiert, um die Stellgröße für den Stromrichterzweigstrom zu erhalten. Daraus kann bei gewünschter zu übertragender Leistung der Sollwert $u^*_q$ für die Zweigspannung als Führungsgröße für die Spannungsregeleinheit 36 bestimmt werden.

Die Spannungsregeleinheit 36 bestimmt mit einem weiterem Addierer 44 die Regelabweichung zwischen dem Sollwert $u^*_q$ und dem Istwert $u_q$ der Zweigspannung und führt die Differenz einem weiteren Regler 46, vorzugsweise PI-Regler, zu, um eine Sollschaltfunktion $s^*(t)$ zur Ansteuerung der Leistungshalbleiterschalter T1-T4 der Submodule 14, 14' der Stromzweige 9a-f zu bestimmen.

Die Stellgröße $s^*(t)$ wird der Modulationseinheit 37 zugeführt, die daraus in Abhängigkeit von dem eingesetzten Modulationsverfahren, wie bspw. PWM-Modulation, Raumzeigermodulation oder dgl., die tatsächlichen Schaltsignale $s(t)$ für die Leistungshalbleiterschalter T1-T4 der Submodule 14, 14' bestimmt.

Somit kann die Regeleinrichtung 32 fortlaufend den Zweigstrom $i_q(t)$ mittels der Überwachungseinrichtung 33 direkt oder indirekt überwachen und derart regeln, dass ein kontinuierlicher, unidirektionaler bzw. unipolarer Zweigstrom $i_q(t)$ erhalten wird. Selbstverständlich sind außer den Regelkreisen nach Fig. 8 andere Regelungskonzepte bzw. -verfahren, wie bspw. adaptive Regelungen, Zustandsregelungen oder dgl., zu diesem Zweck einsetzbar.

Im Folgenden werden vorteilhafte Regelungsstrukturen in größeren Einzelheiten erläutert, die verwendet werden können, um unidirektionale bzw. unipolare Zweigströme $i_q(t)$ in den Stromrichterzweigen 9a-f sowie zusätzliche vorteilhafte Aspekte der Erfindung zu erhalten. Zum besseren Verständnis dieser Aspekte sollen zunächst die Anforderungen für einen unidirektionalen bzw. unipolaren Zweigstrom genauer betrachtet werden, wobei ein dreiphasiger Stromrichter 8 betrachtet wird.

An den Anschlusspunkten 12, 13 des Stromrichters 8 auf der Gleichspannungsseite 6 gilt:

$$u_{dc} = U_{dc}$$

$$i_{dc} = I_{dc}$$

An den Anschlusspunkten 17a-c auf der Wechselspannungsseite 3 gilt:

$$u_N(t) = \hat{U}_N \cdot \cos(\omega t)$$

$$i_N(t) = \hat{I}_N \cdot \cos(\omega t - \varphi)$$

Aus den Spannungen und Strömen an diesen Anschlusspunkten ergeben sich folgende Spannungen und Ströme für einen Phasenzweig 11a-c des Stromrichters 8, nämlich für die Spannung eines Phasenzweiges:

$$u_q(t) = \frac{U_{dc}}{2} + \hat{U}_N \cdot \cos(\omega t) \qquad \qquad (Gl. \ 4)$$

und für den Strom eines Phasenzweiges:

$$i_q(t) = \frac{I_{dc}}{3} - \frac{\hat{I}_N}{2} \cdot \cos(\omega t + \varphi) \qquad \qquad (Gl. \ 5)$$

Für einen unidirektionalen bzw. unipolaren sinusförmigen Zweigstrom gilt $i_q(t)>0$ und somit:

$$I_{dc} > \frac{3}{2}\hat{I}_N \qquad (\text{Gl. 6}).$$

Der Gleichstrom $I_{dc}$ kann bspw. als 1,5-facher Wert der Spitzenamplitude des Wechselstromes festgelegt werden. Diese Bedingung kann durch ein bestimmtes Verhältnis zwischen Gleich- und Wechselspannung erreicht werden. Dieser Zusammenhang kann mit Hilfe der Leistungsbilanz des Zweiges dargelegt werden:

$$p(t) = u_q(t) \cdot i_q(t) = \left(\frac{U_{dc}}{2} + \hat{U}_N \cdot \cos(\omega t)\right) \cdot \left(\frac{I_{dc}}{3} - \frac{\hat{I}_N}{2} \cdot \cos(\omega t + \varphi)\right)$$

$$p(t) = u_q(t) \cdot i_q(t) = \frac{U_{dc}}{2} \cdot \frac{I_{dc}}{3} - \frac{\hat{U}_N \cdot \hat{I}_N}{4} \cdot \cos(\varphi) - \frac{U_{dc}}{2} \cdot \frac{\hat{I}_N}{2} \cdot \cos(\omega t + \varphi) + \frac{I_{dc}}{3} \cdot \hat{U}_N \cdot \cos(\omega t)$$

$$- \frac{\hat{U}_N \cdot \hat{I}_N}{4} \cdot \cos(2\omega t + \varphi) \qquad (\text{Gl. 7}).$$

Aus dieser Betrachtung wird ersichtlich, dass ein Term mit konstanter Leistung und zwei Terme mit oszillierender Leistung vorliegen. Die Terme mit oszillierender Leistung treten mit der Grundfrequenz (1. Harmonischen) und der 2. Harmonischen auf und wirken sich auf die resultierende Spannungswelligkeit der Kondensatoren 19 in den Brückenschaltungen 18 eines Zweiges 9a-f aus. Die mittlere Leistung des Kondensators 19 ist Null, womit sich folgendes Gleichgewicht zwischen der Wechsel-und Gleichstromleistung des Umrichters einstellen muss:

$$\frac{U_{dc}}{2} \cdot \frac{I_{dc}}{3} - \frac{\hat{U}_N \cdot \hat{I}_N}{4} \cdot \cos(\varphi) = 0$$

$$U_{dc} \cdot I_{dc} = \frac{3}{2} \cdot \hat{U}_N \cdot \hat{I}_N \cdot \cos(\varphi) \qquad (\text{Gl. 8}).$$

Unter der Berücksichtigung eines unipolaren Zweigstroms mit der Bedingung $I_{dc} = \frac{3}{2}\hat{I}_N$ ergibt sich:

$$U_{dc} \cdot I_{dc} = \frac{3}{2} \cdot \hat{U}_N \cdot \frac{2}{3} I_{dc} \cos(\varphi).$$

Entsprechend der Leistungsbilanz sollte die Spannung der Gleichspannungsseite somit kleiner sein als:

$$U_{dc} < \hat{U}_N \cos(\varphi) \qquad (\text{Gl. 9}).$$

Diese Bedingung kann erfüllt werden, wenn das Spannungsniveau der Gleichspannungsseite 6 unterhalb der abgeleiteten Grenze liegt.

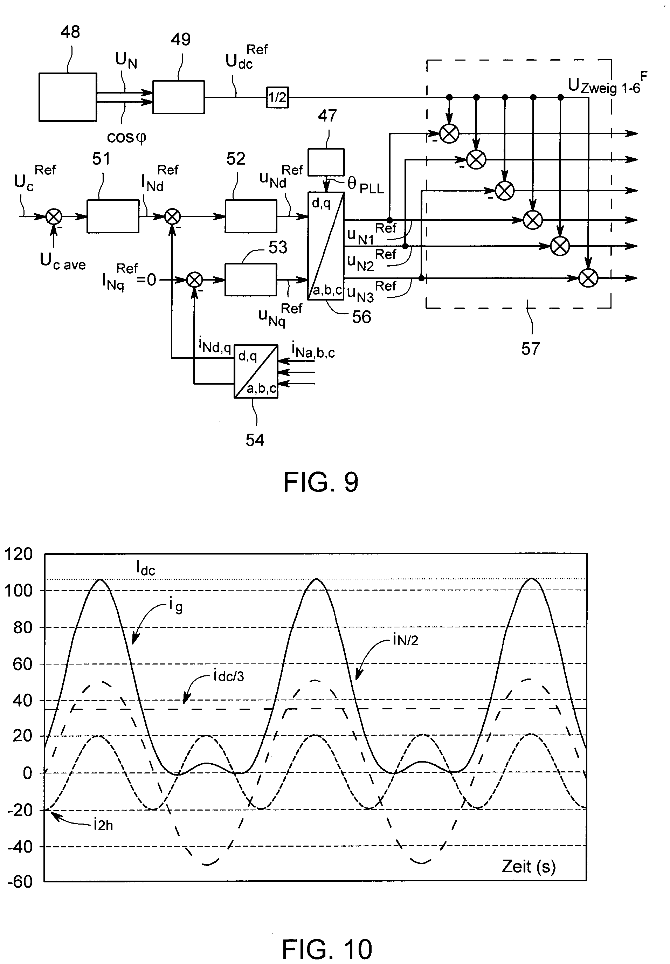

Fig. 9 zeigt ein vereinfachtes Blockschaltbild eines ersten Beispiels zur Implementierung einer Regelungsstruktur eines AC/DC-Umrichters 8 zur Umsetzung unipolarer Zweigströme. Hierin wird bspw. die Gleichspannung $U_{dc}$ dynamisch angepasst, um unterhalb des kritischen Wertes nach Gl. 9 zu verbleiben. In dem Blockdiagramm nach Fig. 9 können folgende Funktionsblöcke unterschieden werden, die wahlweise auch als Einrichtungen bezeichnet werden: PLL (Phase Locked Loop)-Block 47 als Phasenregelschleife zur Synchronisation mit der Wechselspannung $u_N$ des elektrischen Netzes; Block 48 zur Überwachung des Netzes; Block 49 zur Erzeugung des Gleichspannungssollwertes; Block 51 als Regelschleife für die Kondensatorspannung; Blöcke 52 und 53 als Regelschleifen für die Ströme (d- und q-Komponenten) auf der Wechselspannungsseite; Blöcke 54, 56 zur Transformation der dreiphasigen Größen in das d,q-Koordinatensystem und umgekehrt; und Block 57 zur Erzeugung der Sollwerte der Phasenzweigspannungen.

Der PLL-Block 47 erhält Messwerte der Wechselspannungen $u_N$ des elektrischen Netzes und erzeugt mit Hilfe einer Phasenregelschleife einen Winkel $\theta_{PLL}$ zur Positionierung des rotierenden d,q-Koordinatensystems SFR (Synchronous d,q Reference Frame) des Reglers, in dem der Spannungsvektor mit der d-Achse ausgerichtet ist.

Der Block 48 zur Netzüberwachung bestimmt die Höhe der Netzspannungen $u_N$ und den Leistungsfaktor $\cos(\varphi)$. Auf Basis dieser Informationen wird im Block 49 der Sollwert der Gleichspannung $U_{dc}Ref$, d.h. der Gleichanteil in den Referenzen aller 6 Phasenzweigspannungen des Umrichters 8, eingestellt, so dass die Bedingung $U_{dc} < \hat{U}_N \cos(\varphi)$ erfüllt ist. Auf diese Art wird sichergestellt, dass der Zweigstrom unabhängig davon, wie groß der Gleichstrom im Zwischenkreis ist, unipolar ist bzw. ein positives Vorzeichen hat.

Die (mit der Netzspannung phasengleiche) Netzstromkomponente der d-Achse wird verwendet, um den Wirkleistungstransfer durch die Wechselspannungsanschlüsse 17a-c des Stromrichters 8 zu regeln. Diese Komponente wird weiterhin verwendet, um die gesamte gespeicherte Energiemenge in den Gleichspannungskondensatoren 19 auszubalancieren. Dementsprechend wird die d-Komponente des Netzstromsollwertes durch den Regler 51 für die Kondensatorspannung vorgegeben. Dieser Regler 51 verwendet den Mittelwert aller Kondensatorspannungen und gibt den Sollwert der d-Komponente des Stromes $I_{Nd}Ref$ vor.

Die q-Komponente des Stromes steht senkrecht zur Netzspannung und kann verwendet werden, um die Blindleistung und den Leistungsfaktor $\cos(\varphi)$ zu regeln. In dem dargelegten Beispiel ist der Sollwert der q-Stromkomponente $I_{Nq}Ref$ zu Null gesetzt.

Der Netzstrom wird anhand der Sollwerte für die Wechselspannungsanteile in den Phasenzweigen des Stromrichters 8 geregelt. Typischerweise werden zwei PI-Regler 52, 53 zur Regelung der d- und der q-Komponente des Netzstromes eingesetzt. Die dreiphasigen Netzströme werden gemessen und im Block 54 in die d- und q-Komponenten transformiert (SRF), die als Rückkopplungssignale für die geschlossene Stromregelschleife verwendet werden.

Die Stromregler 52, 53 setzen die WechselspannungsSollwerte $U_{Nd}Ref$ und $U_{Nq}Ref$ in dem d, q-Koordinatensystem fest. Nach einer Koordinatentransformation (d,q zu a,b,c) im Block 56 werden die Wechselspannungssollwerte $U_{N1}REf$- $U_{N3}REf$ berechnet und dem Block 57 zugeführt.

Im Block 57 erfolgt die Berechnung der Spannungssollwerte für alle Phasenzweige durch Kombination der Gleich- und Wechselspannungssollwerte für jeden Phasenzweig. Im Mittel synthetisiert der Phasenzweig des Stromrichters die Spannungssollwerte durch eine geeignete Modulation bzw. Pulsbreitenmodulation der Submodule des Phasenzweiges.

Mit der Regelungsstruktur nach Fig. 9 kann die Steuereinrichtung für einen oder mehrere der folgenden vorteilhaften Betriebsmodi mit unipolarem Zweigstrom eingerichtet sein. In einem ersten Betriebsmodus kann sie bspw. zur aktiven Beeinflussung des Zweigstromverlaufs durch Überlagerung der 2. Harmonischen in einem Kreisstrom eingerichtet sein, so dass der Gleichstrom $I_{dc}$ für einen Betrieb mit unipolarem Zweigstrom eingestellt werden kann. Beispielsweise sei ein Kreisstrom der 2. Harmonischen mit folgendem Wert angenommen:

$$\hat{I}_2 = \frac{2}{3} \cdot \frac{1}{\pi} \cdot \hat{I}_N \; .$$

Der geforderte Gleichstrom $I_{dc}$ für einen Betrieb mit unipolarem Zweigstrom reduziert sich dann auf etwa:

$$I_{dc} > 1{,}05 \cdot \hat{I}_N \qquad\qquad (\text{Gl. 10}).$$

Die beispielhaften Verläufe sind in dem Schaubild nach Fig. 10 dargestellt. In dieser Betriebsart ist ein kontinuierlicher Stromfluss in einem Phasenzweig 11a-c angenommen, wobei eine aktive Überlagerung des Kreisstroms der 2. Harmonischen derart ausgeführt ist, dass der Zweigstrom positiv ist und der Gleichstrom $I_{dc}$ in etwa auf das Niveau des Spitzenwertes $\hat{I}$ des Wechselstromes herabgesetzt werden kann. Dementsprechend können die Zweigströme durch den Kreisstrom in seiner Amplitude in bestimmten Grenzen beeinflusst werden, so dass verschiedene Verhältnisse zwischen den gleich- und wechselspannungsseitigen Strömen und Spannungen erreicht werden können.

Für das erläuterte Beispiel sollte der Spitzenwert der Wechselspannung $\hat{U}_N$ oberhalb des nachstehend hergeleiteten Wertes liegen:

$$U_{dc} \cdot I_{dc} \approx \frac{3}{2} \cdot \hat{U}_N \cdot \hat{I}_N \cos(\varphi)$$

$$U_{dc} \cdot I_{dc} \approx \frac{3}{2} \cdot \hat{U}_N \cdot I_{dc} \cos(\varphi)$$

$$U_{dc} < \frac{3}{2} \cdot \hat{U}_N \cdot \cos(\varphi) \qquad \text{(Gl. 11)}$$

Wie aus Gl. 11 ersichtlich, kann durch Überlagerung der 2. Harmonischen eines Kreisstroms vorteilhafterweise das Verhältnis zwischen Wechsel- und Gleichspannung des Umrichters in einem viel größerem Bereich variiert bzw. eingestellt werden.

Damit kann der Betriebsbereich für den Betrieb mit unipolarem Zweigstrom erweitert werden.

In einem weiteren Betriebsmodus kann die Steuereinrichtung 28 zur Minimierung der Rippelspannung der Kondensatoren 19 unter Verwendung unipolarer Zweigströme mit überlagerter 2. Harmonischen des Kreisstroms eingerichtet sein. Da die Überlagerung der 2. Harmonischen des Kreisstroms vielfältige Betriebspunkte mit unterschiedlichem Verhältnis zwischen Wechsel- und Gleichspannung ermöglicht, kann der Stromrichter 8 in Betriebspunkten betrieben werden, in denen sowohl unipolare Zweigströme erhalten werden als auch die Rippelspannung der Kondensatoren der Brückschaltungen minimiert wird. Dies ist ein zusätzlicher Aspekt des überlagerten Kreisstroms der 2. Harmonischen, der genutzt werden kann, um die dominierende 1. Harmonische in der Rippelspannung der Kondensatoren zu reduzieren oder zu eliminieren, wenn hohe Leistungsfaktoren cos(φ) vorliegen.

Die Bedingung zur Beseitigung der 1. Harmonischen der Kondensatorspannung kann aus Gl. 7 und der Anforderung abgeleitet werden, dass die Leistungsfluktuation des Phasenzweiges für die Grundfrequenz Null ist, so dass gelten muss:

$$-\frac{U_{dc}}{2} \cdot \frac{\hat{I}_N}{2} \cos(\omega t + \varphi) + \frac{I_{dc}}{3} \cdot \hat{U}_N \cdot \cos(\omega t) = 0$$

Für große cos(φ), d.h. φ≈0, erhält man

$$\frac{U_{dc}}{2} \cdot \frac{\hat{I}_N}{2} = \frac{I_{dc}}{3} \cdot \hat{U}_N$$

und durch Einfügung der Leistungsbilanz nach Gl. 8:

$$\frac{1}{2} \cdot \frac{3}{2} \cdot \hat{U}_N \cdot \frac{\hat{I}_N}{I_{dc}} \cdot \frac{\hat{I}_N}{2} = \frac{I_{dc}}{3} \cdot \hat{U}_N \cdot$$

Daraus resultiert als notwendige Bedingung, für die die 1. Harmonische in der Rippelspannung des Kondensators für einen Stromrichterbetrieb bei hohem Leistungsfaktor cos(φ) beseitigt werden kann:

$$I_{dc} > \sqrt{\frac{9}{8}}\hat{I}_N \approx 1{,}06 \cdot \hat{I}_N \qquad \text{(Gl. 12)}$$

Aus praktischer Sicht bedeutet dieser Ausdruck, dass der Gleichstrom nur etwas größer als der Spitzenwert des Wechselstroms sein muss, um in Fällen mit hohem Leistungsfaktor cos(φ) die Welligkeit der 1. Harmonischen in der Kondensatorspannung zu beseitigen.

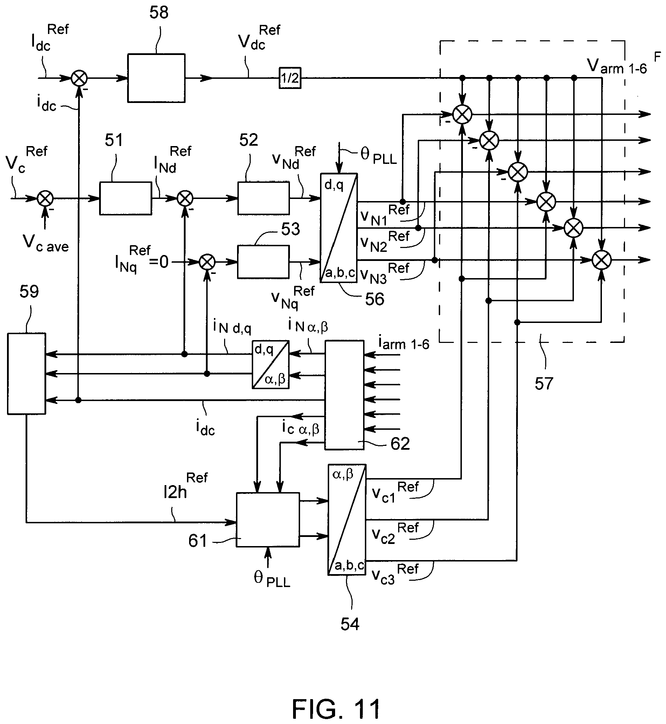

Fig. 11 zeigt ein vereinfachtes Blockschaltbild eines weiteren Beispiels zur Implementierung einer Regelungsstruktur eines AC/DC-Umrichters 8 zur Umsetzung unipolarer Zweigströme. Diese Regelungsstruktur basiert auf einer integrierten Regelung der 2. Harmonischen des Kreisstroms zur Beeinflussung der Phasenzweigströme. Im folgenden Ausführungsbeispiel wird zunächst angenommen, dass der Gleichstrom $I_{dc}$ geregelt wird, wobei sich die Gleichspannung $U_{dc}$ in Abhängigkeit von den Lastbedingungen ändert.

Im Vergleich zu der Regelungsstruktur nach Fig. 9 werden hier folgende Funktionsblöcke zusätzlich verwendet:

Block 58 zur Gleichstromregelung; Block 59 zur Erzeugung des Sollwertes der 2. Harmonischen des Kreisstroms; Block 61 zur Kreisstromregelung; und Block 62 zur Zerlegung der Zweigströme.

Alle Blöcke 47-57 haben die gleiche Funktion wie in der Regelungsstruktur nach Fig. 9, so dass diesbezüglich auf die vorstehenden Ausführungen zu Fig. 9 verwiesen wird. Nachstehend werden nur die zusätzlichen Funktionsblöcke 58-62 näher erläutert.

Die Ströme auf der Wechsel- und Gleichspannungsseite können gesondert gemessen oder aus den gemessenen Phasenzweigströmen ermittelt werden. Es ist ferner möglich aus den Phasenzweigströmen des Stromrichters 8 die vorliegenden Kreisströme zu bestimmen.

In dem Ausführungsbeispiel wird der Gleichstrom $I_{dc}$ durch den Gleichstromregler 58 geführt, der das Niveau der Gleichspannung $U_{dc}$ anpasst, bis der Gleichstrom $I_{dc}$ dem zughörigen Sollwert entspricht.

Auf Grundlage der Gleich- und Wechselstromamplituden wird der Kreisstrom der 2. Harmonischen im Block 59 derart vorgegeben, dass die Phasenzweigströme einen unipolaren Strom führen.

Der Sollwert der 2. Harmonischen wird dem Kreisstromregler 61 übergeben, der diesen mit dem tatsächlich vorliegenden Wert des Kreisstroms vergleicht und Phasenzweigspannungssollwerte entsprechend nachführt, um einen Fluss des geforderten Kreisstroms der 2. Harmonischen zu bewirken. Die tatsächlich vorliegenden Kreisströme werden durch den Block 62 zur Zerlegung der Phasenzweigströme ermittelt.

Als ein weiteres Beispiel für einen Betriebsmodus kann die Steuereinrichtung 28 eingerichtet sein, um für den Betrieb mit konstanter Gleichspannung $U_{dc}$ die Rippelspannung der Kondensatoren zu minimieren. Dafür kann eine ähnliche Regelungsstruktur wie in Fig. 11 verwendet werden. Der einzige Unterschied ist, dass die Gleichspannung $U_{dc}$ an den entsprechenden Anschlusspunkten 12, 13 fest ist, d.h. der Stromrichter 8 befindet sich in der Betriebsart mit Gleichspannungsregelung wie in dem Beispiel nach Fig. 9. Demnach gilt (vgl. Gl. 11):

$$U_{dc} = \frac{3}{2} \cdot \hat{U}_N \cdot \cos(\varphi) \,.$$

Ein Kreisstrom der 2. Harmonischen wird mit folgender Amplitude überlagert:

$$\hat{I}_2 = \frac{2}{3} \cdot \frac{1}{\pi} \cdot \hat{I}_N \approx 0{,}21 \cdot \hat{I}_N$$

Ein Kreisstrom der 2. Harmonischen mit dieser Amplitude erzeugt unipolare Phasenzweigströme mit einer Minimierung der Rippelspannung der Kondensatoren.

Als ein noch weiteres Beispiel für einen Betriebsmodus, für den die Steuereinrichtung 28 eingerichtet sein kann, sei nochmals der in Fig. 5a dargestellte Betriebsmodus mit diskontinuierlichem Zweigstrom betrachtet. Die vorstehend beschriebenen Betriebsmodi unterlagen der Annahme eines kontinuierlichen, unipolaren Zweigstroms mit einem gegebenenfalls aktiv geregelten Kreisstrom der 2. Harmonischen unter der Bedingung, dass der Spitzenwert des Wechselstromes ungefähr gleich dem Gleichstrom sei.

Die Betriebsart mit Überlagerung des Kreisstromes der 2. Harmonischen kann in natürlicher Weise ohne aktive Regelung erreicht werden. Wenn der Gleichstromwert etwas oberhalb des Spitzenwertes des Netzstroms liegt (bspw. bei einem Faktor von 1,05), verteilen sich die Phasenzweigströme auf natürliche Weise ähnlich einer 6-Puls-Brückengleichrichtung. Die Zweigströme haben dann einen diskontinuierlichen Verlauf mit nicht leitenden Phasen bis zu einer halben Periode der Grundfrequenz. Die resultierenden Zweigströme sehen denen mit aktiver Kreisstromüberlagerung ähnlich und enthalten die 2. Harmonische mit fast gleicher Amplitude. Idealisiert ergibt sich für jeden Zweigstrom der in Fig. 5b gezeigte Stromverlauf, wobei hier die überlagerte 2. Harmonische des Kreisstroms nicht dargestellt ist.

An dieser Stelle sei angemerkt, dass die Zweigströme und der Anteil der 2. Harmonischen indirekt erreicht werden und ein konstantes, gleichbleibendes Verhältnis zwischen der Wechsel- und Gleichstromseite vorliegt.

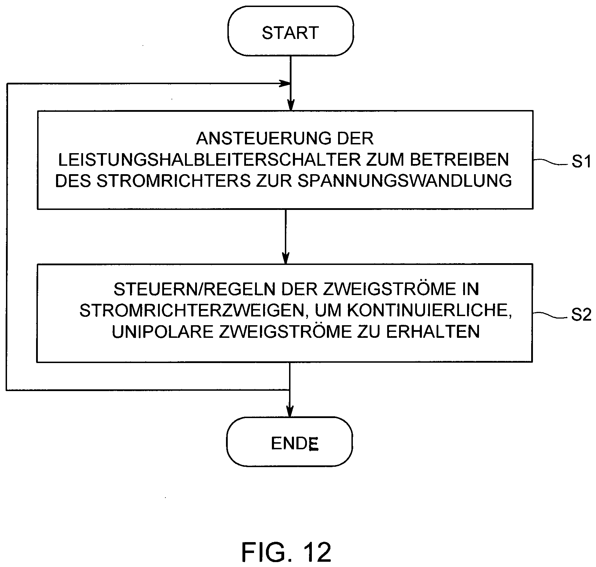

Fig. 12 zeigt ein Verfahren zum Betreiben eines modularen Mehrpunktstromrichters, wie bspw. des in Fig. 1 dargestellten Stromrichters 8, der eine Anzahl von Stromrichterzweigen, bspw. 9a-f, mit jeweils einer Anzahl von Submodulen, z.B. 14, 14', enthält, wobei jedes Submodul 14, 14' durch eine Brückenschaltung mit wenigstens zwei Leistungshalbleiterschaltern gebildet ist. Das Verfahren weist im Schritt S1 ein Ansteuern der Leistungshalbleiterschalter, z.B. T1-T4, aller Submodule 14, 14' aller Stromrichterzweige 9a-f in Abhängigkeit von den momentanen Betriebsbedingungen, um den Stromrichter 8 zu betreiben, um eine eingangsseitige Wechselspannung, z.B. $u_N(t)$ des Mehrpunktstromrichters in eine ausgangsseitige Gleichspannung, z.B. $U_{dc}$, umzuwandeln oder umgekehrt.

Das Verfahren weist ferner im Schritt S2 den Schritt des Steuerns bzw. Regelns der Zweigströme, z.B. $i_q(t)$, durch die Stromrichterzweige 9a-f in einer derartigen Weise auf, dass durch die Stromrichterzweige 9a-f jeweils ein Strom $i_q(t)$ einer einzigen Polarität fließt. Insbesondere ist der durch die Steuerung bzw. Regelung sich ergebende Zweigstrom ein vorzugsweise kontinuierlicher, unidirektionaler oder unipolarer, im Wesentlichen sinusförmiger Strom mit einem Gleichanteil, der sicherstellt, dass der Zweigstrom stets entweder positiv (zumindest nicht-negativ) oder negativ (zumindest nicht-positiv) ist.

In einer Ausführungsform weist das Verfahren ein Überwachen wenigstens einer einen Zweigstrom durch die Stromrichterzweige kennzeichnenden Größe auf, und der Schritt S2 des Steuerns bzw. Regelns der Zweigströme weist ein Regeln der Zweigströme in Abhängigkeit von der überwachten Größe auf.

Das Überwachen einer einen Zweigstrom durch die Stromrichterzweige kennzeichnenden Größe kann ein direktes Messen der Zweigströme unmittelbar in den jeweiligen Stromrichterzweigen 9a-f aufweisen, wobei dann die Zweigströme auf der Basis der Zweigstrommesswerte geregelt werden können.

Alternativ kann das Überwachen einer einen Zweigstrom durch die Stromrichterzweige 9a-f kennzeichnenden Größe ein Messen eines Zwischenkreisgleichstroms, z.B. $I_{dc}$, in einem Gleichspannungszwischenkreis des Mehrpunktstromrichters 8 und von Phasenströmen in Wechselspannungs-Phasenausgängen 17a-c aufweisen, wobei die Zweigströme auf der Basis der Messwerte des Zwischenkreisgleichstroms und der Phasenströme geregelt werden können.

In dem Verfahren einer beliebigen vorstehend erwähnten Art können die Zweigströme auf der Basis einer Erhöhung des DC-Stromsollwertes oder Gleichanteils $I_g$ eines Zweigstroms $i_q(t)$ bzw. des Zwischenkreisgleichstroms $I_{dc}$ gesteuert bzw. geregelt werden.

In einer vorteilhaften Ausführungsform des Verfahrens kann das Steuern bzw. Regeln der Zweigströme auf der Basis einer aktiven Überlagerung eines Kreisstromes der 2. Harmonischen vorgenommen werden, wobei gleichzeitig eine Anpassung der Gleichspannung erzielt wird. Alternativ oder zusätzlich kann gleichzeitig eine Modifikation der Verhältnisse zwischen wechsel- und gleichspannungsseitigen Strömen und Spannungen des Stromrichters erzielt werden. Als weitere Alternative oder weiter zusätzlich kann gleichzeitig eine Minimierung der Rippelspannung von Kondensatoren der Submodule erzielt werden.

Im Rahmen der Erfindung sind zahlreiche Modifikationen möglich. Bspw. kann der Stromrichter 8 mehr oder weniger Phasen als die in Fig. 1 veranschaulichten drei Phasen enthalten. Die Anzahl der Submodule 14, 14' pro Stromrichterzweig ist ebenfalls je nach Anwendung und Anforderung beliebig wählbar. Während die Stromrichterzweige hier identisch ausgebildet sind, könnten die Stromrichterzweige prinzipiell unterschiedlich, auch asymmetrisch ausgebildet sein. Obwohl in Fig. 1 der Stromrichter 8 als ein Gleichrichter veranschaulicht ist, der die Netzspannung $u_N(t)$ in die Gleichspannung $U_{dc}$ an seinem Ausgang 6 liefert, kann der Stromrichter 8 auch als Wechselrichter oder auch als Frequenzumrichter eingerichtet sein. Der Stromrichter 8 kann für unterschiedliche Anwendungen zur Umformung und Verteilung elektrischer Energie, zur Netzkopplung, zur Blindleistungskompensation, zur Hochspannung-GleichstromÜbertragung oder für elektromechanische Antriebe verwendet werden. Anstelle der veranschaulichten Submodule 14, 14' können auch andere Submodule verwendet werden, wie sie bspw. in der eingangs erwähnten EP 1 497 911 B1, außer den Halbbrückenbasierten Submodulen, verwendet werden.

Es sind ein modularer Mehrpunktstromrichter 8 zur Umwandlung einer Wechselspannung in eine Gleichspannung oder umgekehrt und ein Verfahren zum Betreiben des Mehrpunktstromrichters geschaffen. Der Mehrpunktstromrichter weist mehrere Stromrichterzweige 9a-f auf, wobei jeweils zwei Stromrichterzweige 9a-b, 9c-d, 9e-f miteinander verbunden sind, um einen Phasenzweig 11a-c des Stromrichters 8 zu bilden. Jeder Stromrichterzweig weist eine Anzahl von gleichartigen Submodulen 14, 14' auf, die jeweils durch eine H-Brückenschaltung 18 mit Leistungshalbleiterschaltern T1-T4 gebildet sind. Die Zweigströme $i_q(t)$ durch die Stromrichterzweige 9a-f werden im Betrieb durch Erhöhung des Gleichanteils $I_g$ des Zweigstroms oder des Zwischenkreisgleichstroms $I_{dc}$ derart gesteuert bzw. geregelt, dass durch die Stromrichterzweige 9a-f jeweils ein Strom einer einzigen Polarität, vorzugsweise ein kontinuierlicher unipolarer sinusförmiger Strom, fließt. Dadurch kann bei gleicher Anzahl von Submodulen 14, 14' pro Stromrichterzweig 9a-f die übertragbare Leistung erhöht bzw. die Leistungshalbleiterbauelemente besser ausgenutzt werden oder bei gleichbleibender übertragbarer Leistung die Anzahl von Submodulen 14, 14' reduziert werden.

## Patentansprüche

1. Modularer Mehrpunktstromrichter zur Umwandlung einer Wechselspannung in eine Gleichspannung oder umgekehrt

   mit einer Anzahl von Stromrichterzweigen (9a-f), wobei jeder Stromrichterzweig (9a-f) eine Anzahl von Submodulen (14, 14') enthält, wobei jedes Submodul (14, 14') durch eine Brückenschaltung (18) mit wenigstens zwei Leistungshalbleiterschaltern (T1-T4) gebildet ist, wobei jedes Submodul angepasst ist bipolare Klemmenspannungen zu realisieren, und

   mit einer Steuereinrichtung (28) zur Steuerung des Betriebs des Mehrpunktstromrichters (8), wobei die Steuereinrichtung (28) eine Steuerlogik (31) aufweist, die eingerichtet ist, um einen Zweigstrom ($i_q(t)$) durch die Stromrichterzweige (9a-f) derart zu steuern bzw. zu regeln, dass durch die Stromrichterzweige (9a-f) jeweils ein Strom einer einzigen Polarität fließt;

**dadurch gekennzeichnet, dass**

der Zweigstrom einer einzigen Polarität ein unidirektionaler, kontinuierlicher, im Wesentlichen sinusförmiger Strom ist, der einen Mittelwert ($I_g$) aufweist, der in etwa gleich oder größer als die Spitzenamplitude des Wechselanteils des Zweigstroms ist.

2. Modularer Mehrpunktstromrichter nach Anspruch 1, **dadurch gekennzeichnet, dass** jeder Stromrichterzweig (9a-f) eine Reihenschaltung aus wenigstens zwei Submodulen (14, 14') aufweist, wobei ein erster Wechselspannungsanschluss (26) wenigstens eines Submoduls (14, 14') mit einem zweiten Wechselspannungsanschluss (27) eines benachbarten Submoduls (14, 14') elektrisch verbunden ist.

3. Modularer Mehrpunktstromrichter nach einem der vorhergehenden Ansprüche, **dadurch gekennzeichnet, dass** er eine einer Anzahl von Phasen entsprechende Anzahl von Phasenzweigen (11a-c) aufweist, die zwischen einer positiven und einer negativen Zwischenkreisgleichspannungsklemme (12, 13) des Mehrpunktstromrichters (8) angeschlossen sind, wobei jeder Phasenzweig (11a-c) durch zwei miteinander in Reihe verbundene gleichartige Stromrichterzweige (9a-b, 9c-d, 9e-f) gebildet ist und wobei ein Verbindungspunkt zwischen den beiden Stromrichterzweigen eines jeden Phasenzweigs (11a-c) mit einer Wechselspannungsklemme (26, 27) des Mehrpunktstromrichters (8) verbunden ist.

4. Modularer Mehrpunktstromrichter nach einem der vorhergehenden Ansprüche, **dadurch gekennzeichnet, dass** jedes Submodul (14, 14') aufweist:

eine H-Brückenschaltung (18) mit zwei parallelen Leistungshalbleiterzweigen (21, 22), die zwischen einem ersten und einem zweiten Gleichspannungsknoten (23, 24) des Submoduls (14, 14') angeschlossen sind und in denen jeweils wenigstens ein ansteuerbarer Leistungshalbleiterschalter (T1-T4) angeordnet ist, zu dem vorzugsweise eine Freilaufdiode (D1-D4) antiparallel geschaltet ist; und
einen Kondensator (C, 19), der parallel zu der H-Brückenschaltung (18) zwischen dem ersten und dem zweiten Gleichspannungsknoten (23, 24) angeschlossen ist.

5. Modularer Mehrpunktstromrichter nach Anspruch 4, **dadurch gekennzeichnet, dass** jeder Leistungshalbleiterzweig (21, 22) zwei in Reihe verbundene Leistungshalbleiterschalter (T1, T2; T3, T4) aufweist, denen jeweils eine antiparallele Freilaufdiode (D1-D4) zugeordnet ist und deren Verbindungspunkte einen ersten bzw. zweiten Wechselspannungsanschluss (26, 27) des Submoduls (14) bilden.

6. Modularer Mehrpunktstromrichter nach Anspruch 4, **dadurch gekennzeichnet, dass** die Brückenschaltung (18) einen ersten Leistungshalbleiterzweig (21) mit einer Reihenschaltung aus einem ersten Leistungshalbleiterschalter (T2; T1) und einer ersten Diode (D1; D2) sowie einen zweiten Leistungshalbleiterzweig (22) mit einer Reihenschaltung aus einem zweiten Leistungshalbleiterschalter (T3; T4) und einer zweiten Diode (D4; D3) aufweist, wobei die erste und die zweite Diode (D1, D4; D2, D3) in einer Brückendiagonale der Brückenschaltung angeordnet sind und jedem Leistungshalbleiterschalter (T2, T3; T1, T4) vorzugsweise eine antiparallele Freilaufdiode (D2, D3; D1, D4) zugeordnet ist, wobei ein Verbindungspunkt zwischen dem ersten Leistungshalbleiterschalter (T2; T1) und der ersten Diode (D1; D2) einen ersten Wechselspannungsanschluss (26) des Submoduls (14') bildet und ein Verbindungspunkt zwischen dem zweiten Leistungshalbleiterschalter (T3; T4) und der zweiten Dioden (D4; D3) einen zweiten Wechselspannungsanschluss (27) des Submoduls (14') bildet.

7. Modularer Mehrpunktstromrichter nach einem der vorhergehenden Ansprüche, **dadurch gekennzeichnet, dass** er eine Überwachungseinrichtung (33) zur Überwachung wenigstens einer einen Zweigstrom ($i_q(t)$) durch wenigstens einen Stromrichterzweig (9a-f) kennzeichnenden Größe aufweist.

8. Modularer Mehrpunktstromrichter nach Anspruch 7, **dadurch gekennzeichnet, dass** die Überwachungseinrichtung (33) dazu eingerichtet ist, den Zweigstrom in jedem Stromrichterzweig (9a-f) direkt zu messen oder einen Zwischenkreisgleichstrom ($I_{dc}$) und Phasenströme an allen Wechselspannungs-Phasenausgängen (17a-c) des Mehrpunktstromrichters (8) zu messen.

9. Modularer Mehrpunktstromrichter nach einem beliebigen der Ansprüche 6-8, **dadurch gekennzeichnet, dass** die Steuereinrichtung (28) eine Regeleinrichtung (32) zur Regelung des Zweigstroms ($i_q(t)$) durch die Stromrichterzweige (9a-f) auf der Basis der wenigstens einen einen Zweigstrom durch wenigstens einen Stromrichterzweig (9a-f) kennzeichnenden Größe aufweist.

10. Modularer Mehrpunktstromrichter nach einem beliebigen der vorhergehenden Ansprüche, **dadurch gekennzeichnet, dass** die Steuerlogik (31) den Zweigstrom durch Erhöhung eines Gleichanteils ($I_g$) des Zweigstroms ($i_q(t)$) bzw. des Zwischenkreisgleichstroms ($I_{dc}$) steuert bzw. regelt.

11. Modularer Mehrpunktstromrichter nach einem beliebigen der vorhergehenden Ansprüche, **dadurch gekennzeichnet, dass** die Steuerlogik (31) dazu eingerichtet ist, einen Kreisstrom der 2. Harmonischen einem Zweigstrom ($i_q(t)$) zu überlagern, um einen Betrieb mit unidirektionalem Zweigstrom unter Anpassung der Gleichspannung ($U_{dc}$) bzw. unter Modifikation der Verhältnisse zwischen wechsel- und gleichspannungsseitigen Strömen und Spannungen des Stromrichters (8) zu erzielen.

12. Modularer Mehrpunktstromrichter nach einem beliebigen der vorhergehenden Ansprüche, **dadurch gekennzeichnet, dass** die Steuerlogik (31) dazu eingerichtet ist, einen Kreisstrom der 2. Harmonischen einem Zweigstrom ($i_q(t)$) zu überlagern, um einen Betrieb mit unidirektionalem Zweigstrom unter Minimierung der Rippelspannung von Kondensatoren (C, 19) der Submodule (14, 14') zu erzielen.

13. Modularer Mehrpunktstromrichter nach Anspruch 11 oder 12, **dadurch gekennzeichnet, dass** die Steuerlogik (31) eine Reglereinheit (61) zur Regelung der zu überlagernden Kreisströme der 2. Harmonischen aufweist.

14. Verfahren zum Betreiben eines modularen Mehrpunktstromrichters, der eine Anzahl von Stromrichterzweigen (9a-f) mit jeweils einer Anzahl von Submodulen (14, 14') enthält, wobei jedes Submodul (14, 14') durch eine Brückenschaltung (18) mit wenigstens zwei Leistungshalbleiterschaltern (T1-T4) gebildet ist, und wobei jedes Submodul angepasst ist bipolare Klemmenspannungen zu realisieren, wobei das Verfahren aufweist:

   Ansteuern (S1) der Leistungshalbleiterschalter (T1-T4) aller Submodule (14, 14') in Abhängigkeit von momentanen Betriebsbedingungen, um eine eingangsseitige Wechselspannung ($u_N(t)$) des Mehrpunktstromrichters (8) in eine ausgangsseitige Gleichspannung ($U_{dc}$) umzuwandeln oder umgekehrt; und
   Steuern bzw. Regeln (S2) der Zweigströme ($i_q(t)$) durch die Stromrichterzweige (9a-f) in einer derartigen Weise, das durch die Stromrichterzweige jeweils ein Strom einer einzigen Polarität fließt;
   **dadurch gekennzeichnet, dass**
   der Zweigstrom einer einzigen Polarität ein unidirektionaler, kontinuierlicher, im Wesentlichen sinusförmiger Strom ist, der einen Mittelwert ($I_g$) aufweist, der in etwa gleich oder größer als die Spitzenamplitude des Wechselanteils des Zweigstroms ist.

15. Verfahren nach Anspruch 14, **dadurch gekennzeichnet, dass** es ferner ein Überwachen wenigstens einer einen Zweigstrom ($i_q(t)$) durch die Stromrichterzweige (9a-f) kennzeichnenden Größe aufweist, wobei das Steuern bzw. Regeln (S2) der Zweigströme ein Regeln der Zweigströme in Abhängigkeit von der überwachten Größe aufweist.

16. Verfahren nach einem beliebigen der Ansprüche 14-15, **dadurch gekennzeichnet, dass** das Steuern bzw. Regeln (S2) der Zweigströme auf der Basis einer Erhöhung eines Gleichanteils ($I_g$) eines Zweigstroms bzw. eines Zwischenkreisgleichstroms erfolgt.

17. Verfahren nach einem beliebigen der Ansprüche 14-16, **dadurch gekennzeichnet, dass** das Steuern bzw. Regeln (S2) der Zweigströme auf der Basis einer aktiven Überlagerung eines Kreisstromes der 2. Harmonischen erfolgt, um gleichzeitig wenigstens eines der Folgenden zu erreichen: Anpassung der Gleichspannung; Modifikation der Verhältnisse zwischen wechsel- und gleichspannungsseitigen Strömen und Spannungen des Stromrichters; und/oder Minimierung der Rippelspannung von Kondensatoren der Submodule.

**Claims**

1. A modular multilevel power converter for converting an alternating voltage into a direct voltage or vice versa, comprising
   a number of converter branches (9a-f), each converter branch (9a-f) including a number of submodules (14, 14'), each submodule (14, 14') formed by a bridge circuit (18) having at least two power semiconductor switches (T1-T4), wherein each submodule is adapted to realize bipolar terminal voltages, and
   a control device (28) for controlling the operation of the multilevel power converter (8), the control device (28) having a control logic (31) configured to control or regulate a branch current ($i_q(t)$) through the converter branches (9a-f) such that a current of a single polarity flows through each of the converter branches (9a-f);

**characterized in that**
the branch current of a single polarity is a unidirectional, continuous, substantially sinusoidal current having an average value ($I_g$) which is approximately equal to or greater than the peak amplitude of the alternating component of the branch current.

2. The modular multilevel power converter according to claim 1, **characterized in that** each converter branch (9a-f) comprises a series connection of at least two submodules (14, 14'), wherein a first AC voltage connection (26) of at least one submodule (14, 14') is electrically connected to a second AC voltage connection (27) of an adjacent submodule (14, 14').

3. The modular multilevel power converter according to anyone of the preceding claims, **characterized in that** it comprises a number of phase legs (11a-c) corresponding to a number of phases, which are connected between a positive and a negative intermediate circuit terminal (12, 13) of the multilevel power converter (8), wherein each phase leg (11a-c) is formed by two identical converter branches (9a-b, 9c-d, 9e-f) connected in series, and wherein a connection point between the two converter branches of each phase leg (11a-c) is connected to an AC voltage terminal (26, 27) of the multilevel power converter (8).

4. The modular multilevel power converter according to anyone of the preceding claims, **characterized in that** each submodule (14, 14') comprises:

   an H-bridge circuit (18) having two parallel power semiconductor branches (21, 22), which are connected between a first and a second DC voltage node (23, 24) of the submodule (14, 14') and in each of which at least one controllable power semiconductor switch (T1-T4) is arranged, to which a freewheeling diode (D1-D4) is preferably connected antiparallel; and
   a capacitor (C, 19) connected in parallel to the H-bridge circuit (18) between the first and second DC voltage nodes (23, 24).

5. The modular multilevel power converter according to claim 4, **characterized in that** each power semiconductor branch (21, 22) comprises two power semiconductor switches (T1, T2; T3, T4) connected in series, each of which is assigned an antiparallel freewheeling diode (D1-D4) and the connection points of which form a first and a second AC voltage connection (26, 27) of the submodule (14), respectively.

6. The modular multilevel power converter according to claim 4, **characterized in that** the bridge circuit (18) comprises a first power semiconductor branch (21) with a series circuit of a first power semiconductor switch (T2; T1) and a first diode (D1; D2) and a second power semiconductor branch (22) with a series circuit of a second power semiconductor switch (T3; T4) and a second diode (D4; D3), wherein the first and the second diode (D1, D4; D2, D3) are arranged in a bridge diagonal of the bridge circuit and each power semiconductor switch (T2, T3; T1, T4) is preferably assigned an antiparallel freewheeling diode (D2, D3; D1, D4), wherein a connection point between the first power semiconductor switch (T2; T1) and the first diode (D1; D2) forms a first AC voltage connection (26) of the submodule (14') and a connection point between the second power semiconductor switch (T3; T4) and the second diode (D4; D3) forms a second AC voltage connection (27) of the submodule (14').

7. The modular multilevel power converter according to anyone of the preceding claims, **characterized in that** it comprises a monitoring device (33) for monitoring at least one variable characterizing a branch current ($i_q(t)$) through at least one converter branch (9a-f).

8. The modular multilevel power converter according to claim 7, **characterized in that** the monitoring device (33) is arranged to directly measure the branch current in each converter branch (9a-f) or to measure an intermediate circuit direct current ($I_{dc}$) and phase currents at all AC phase outputs (17a-c) of the multilevel power converter (8) .

9. The modular multilevel power converter according to anyone of the claims 6-8, **characterized in that** the control device (28) comprises a regulation device (32) for regulating the branch current ($i_q(t)$) through the converter branches (9a-f) based on the at least one variable characterizing a branch current through at least one converter branch (9a-f).

10. The modular multilevel power converter according to anyone of the preceding claims, **characterized in that** the control logic (31) controls or regulates the branch current by increasing a direct component ($I_g$) of the branch current ($i_q(t)$) or the intermediate circuit direct current ($I_{dc}$).

11. The modular multilevel power converter according to anyone of the preceding claims, **characterized in that** the control logic (31) is arranged to superimpose a circulating current of the second harmonic on a branch current ($i_q(t)$) in order to achieve an operation with a unidirectional branch current while adapting the direct voltage ($U_{dc}$) or while modifying the relationships between AC and DC-side currents and voltages of the power converter (8) .

12. The modular multilevel power converter according to anyone of the preceding claims, **characterized in that** the control logic (31) is arranged to superimpose a circulating current of the second harmonic on a branch current ($i_q(t)$) in order to achieve an operation with a unidirectional branch current while minimizing the ripple voltage of capacitors (C, 19) of the submodules (14, 14').

13. The modular multilevel power converter according to claim 11 or 12, **characterized in that** the control logic (31) comprises a regulator unit (61) for regulating the circulating currents of the second harmonic to be superimposed.

14. A method of operating a modular multilevel power converter including a number of converter branches (9a-f), each having a number of submodules (14, 14'), wherein each submodule (14, 14') is formed by a bridge circuit (18) having at least two power semiconductor switches (T1-T4), and wherein each submodule is adapted to realize bipolar terminal voltages, wherein the method comprises:

driving (S1) the power semiconductor switches (T1-T4) of all submodules (14, 14') as a function of current operating conditions in order to convert an input-side AC voltage ($u_N(t)$) of the multilevel power converter (8) into an output-side DC voltage ($U_{dc}$) or vice versa; and
controlling or regulating (S2) the branch currents ($i_q(t)$) through the converter branches (9a-f) in such a manner that a current of a single polarity flows through each of the converter branches;
**characterized in that**
the branch current of a single polarity is a unidirectional, continuous, substantially sinusoidal current having an average value ($I_g$) which is approximately equal to or greater than the peak amplitude of the alternating component of the branch current.

15. The method according to claim 14, **characterized in that** it further comprises monitoring at least one variable characterizing a branch current ($i_q(t)$) through the converter branches (9a-f), wherein controlling or regulating (S2) the branch currents comprises regulating the branch currents as a function of the monitored variable.

16. The method according to anyone of the claims 14-15, **characterized in that** controlling or regulating (S2) the branch currents is performed based on an increase of the direct component ($I_g$) of a branch current or an intermediate circuit direct current.

17. The method according to anyone of the claims 14-16, **characterized in that** controlling or regulating (S2) the branch currents is performed based on an active superimposition of a circulating current of the second harmonic in order to achieve at least one of the following: adjustment of the direct voltage; modification of the relationships between the AC and DC-side currents and voltages of the power converter; and/or minimization of the ripple voltage of capacitors of the submodules.

**Revendications**

1. Convertisseur multipoint modulaire pour convertir une tension alternative en une tension continue, ou vice versa avec un nombre de branches de convertisseur (9a-f), dans lequel chaque branche de convertisseur (9a-f) contient un nombre de sous-modules (14, 14'), dans lequel chaque sous-module (14, 14') est formé par un circuit en pont (18) ayant au moins deux commutateurs à semi-conducteurs de puissance (T1-T4), dans lequel chaque sous-module est adapté pour réaliser des tensions aux bornes bipolaires, et
avec un dispositif de commande (28) pour commander le fonctionnement du convertisseur multipoint (8), dans lequel le dispositif de commande (28) comprend une logique de commande (31) qui est configurée pour commander et/ou réguler un courant de dérivation ($i_q(t)$) à travers les branches de convertisseur (9a-f) de telle sorte que respectivement un courant d'une unique polarité circule à travers les branches de convertisseur (9a-f) ;
**caractérisé en ce que**
le courant de dérivation d'une polarité unique est un courant unidirectionnel, continu, sensiblement sinusoïdal présentant une valeur moyenne ($I_g$) qui est approximativement égale ou supérieure à l'amplitude de crête de la composante alternative du courant de dérivation.

**2.** Convertisseur multipoint modulaire selon la revendication 1, **caractérisé en ce que** chaque branche de convertisseur (9a-f) comporte un montage en série formé d'au moins deux sous-modules (14,14'), dans lequel une première sortie de tension alternative (26) d'au moins un sous-module (14, 14') est reliée électriquement à une seconde sortie de tension alternative (27) d'un sous-module adjacent (14, 14').

**3.** Convertisseur multipoint modulaire selon l'une quelconque des revendications précédentes, **caractérisé en ce qu'**il comporte un nombre de branches de phases (lla-c) correspondant à un nombre de phases, lesquelles sont raccordées entre une borne de courant continu intermédiaire positive et négative (12, 13) du convertisseur multipoint (8), dans lequel chaque branche de phase (lla-c) est formée par deux branches de convertisseur similaires connectées entre elles en série (9a-b, 9c-d, 9e-f), et dans lequel un point de connexion entre les deux branches de convertisseur de chaque branche de phase (lla-c) est relié à une borne de tension alternative (26, 27) du convertisseur multipoint (8).

**4.** Convertisseur multipoint modulaire selon l'une quelconque des revendications précédentes, **caractérisé en ce que** chaque sous-module (14, 14') comprend :

un circuit en pont en H (18) avec deux branches à semi-conducteurs de puissance parallèles (21, 22) qui sont raccordées entre un premier et un second nœud de tension continue (23, 24) du sous-module (14, 14') et dans chacune desquelles est agencé au moins un commutateur à semi-conducteurs de puissance pouvant être commandé (T1-T4), auquel est connectée en antiparallèle de préférence une diode à effet unidirectionnel (D1-D4) ; et
un condensateur (C, 19) qui est raccordé parallèlement au circuit en pont en H (18) entre le premier et le second nœud de tension continue (23, 24).

**5.** Convertisseur multipoint modulaire selon la revendication 4, **caractérisé en ce que** chaque branche à semi-conducteurs de puissance (21, 22) comporte deux commutateurs à semi-conducteurs de puissance en série (T1, T2 ; T3, T4) à chacun desquels est attribuée une diode à effet unidirectionnel (D1-D4) en antiparallèle et dont les points de connexion forment une première et/ou une seconde sortie de tension alternative (26, 27) du sous-module (14).

**6.** Convertisseur multipoint modulaire selon la revendication 4, **caractérisé en ce que** le circuit en pont (18) comporte une première branche à semi-conducteurs de puissance (21) avec un montage en série formé d'un premier commutateur à semi-conducteurs de puissance (T2 ; T1) et une première diode (D1 ; D2) ainsi qu'une seconde branche à semi-conducteurs de puissance (22) avec un montage en série formé d'un second commutateur à semi-conducteurs de puissance (T3 ; T4) et une seconde diode (D4 ; D3), dans lequel la première et la seconde diodes (D1, D4 ; D2, D3) sont agencées dans une diagonale de pont du circuit en pont et de préférence une diode à effet unidirectionnel en antiparallèle (D2, D3 ; D1, D4) est attribuée à chaque commutateur à semi-conducteurs de puissance (T2, T3 ; T1, T4), dans lequel un point de connexion entre le premier commutateur à semi-conducteurs de puissance (T2 ; T1) et la première diode (D1 ; D2) forme une première sortie de tension alternative (26) du sous-module (14') et un point de connexion entre le second commutateur à semi-conducteurs de puissance (T3 ; T4) et la seconde diode (D4 ; D3) forme une seconde sortie de tension alternative (27) du sous-module (14').

**7.** Convertisseur multipoint modulaire selon l'une quelconque des revendications précédentes, **caractérisé en ce qu'**il comprend un dispositif de surveillance (33) destiné à surveiller au moins une grandeur caractérisant un courant de dérivation ($i_q(t)$) à travers au moins une branche de convertisseur (9a-f).

**8.** Convertisseur multipoint modulaire selon la revendication 7, **caractérisé en ce que** le dispositif de surveillance (33) est configuré pour mesurer directement le courant de branche dans chaque branche de convertisseur (9a-f) ou mesurer un courant continu intermédiaire ($I_{dc}$) et des courants de phase sur toutes les sorties de phase en courant alternatif (17a-c) du convertisseur multipoint (8).

**9.** Convertisseur multipoint modulaire selon l'une quelconque des revendications 6 à 8, **caractérisé en ce que** le dispositif de commande (28) comporte un dispositif de régulation (32) pour la régulation du courant de dérivation ($i_q(t)$) à travers les branches de convertisseur (9a-f) sur la base de la grandeur caractérisant au moins un courant de dérivation à travers au moins une branche de convertisseur (9a-f).

**10.** Convertisseur multipoint modulaire selon l'une quelconque des revendications précédentes, **caractérisé en ce que** la logique de commande (31) commande et/ou régule le courant de dérivation en augmentant une composante continue ($I_g$) du courant de dérivation ($i_q(t)$) et/ou du courant continu intermédiaire ($I_{dc}$).

**11.** Convertisseur multipoint modulaire selon l'une quelconque des revendications précédentes, **caractérisé en ce que** la logique de commande (31) est configurée pour superposer un courant circulaire de la deuxième harmonique à un courant de dérivation ($i_q(t)$), afin d'obtenir un fonctionnement avec le courant de dérivation unidirectionnel en adaptant la tension continue ($U_{dc}$) et/ou en modifiant les rapports entre les courants côté tension continue et tension alternative et les tensions du convertisseur de puissance (8).

**12.** Convertisseur multipoint modulaire selon l'une quelconque des revendications précédentes, **caractérisé en ce que** la logique de commande (31) est configurée pour superposer un courant circulaire de la deuxième harmonique à un courant de dérivation ($i_q(t)$), afin d'obtenir un fonctionnement avec le courant de dérivation unidirectionnel en minimisant la tension d'ondulation des condensateurs (C, 19) des sous-modules (14, 14').

**13.** Convertisseur multipoint modulaire selon les revendications 11 ou 12, **caractérisé en ce que** la logique de commande (31) comprend une unité de régulateur (61) pour réguler les courants circulaires de la deuxième harmonique devant être superposés.

**14.** Procédé de fonctionnement d'un convertisseur multipoint modulaire, qui contient un nombre de branches de convertisseur (9a-f) avec respectivement un nombre de sous-modules (14, 14'), dans lequel chaque sous-module (14, 14') est formé par un circuit en pont (18) ayant au moins deux commutateurs à semi-conducteurs de puissance (T1-T4), et dans lequel chaque sous-module est adapté pour réaliser des tensions aux bornes bipolaires ;

le procédé comprenant :

la commande (S1) des commutateurs à semi-conducteurs de puissance (T1-T4) de tous les sous-modules (14, 14') en fonction des conditions d'exploitation momentanées pour convertir une tension alternative côté entrée ($U_N(t)$) du convertisseur multipoint (8) en une tension continue côté sortie ($U_{dc}$) ou vice versa ; et

la commande et/ou la régulation (S2) des courants de dérivation ($i_q(t)$) à travers les branches de convertisseur (9a-f) d'une manière telle qu'un courant d'une polarité unique circule à travers les branches de convertisseur ;

**caractérisé en ce que**

le courant de dérivation d'une unique polarité est un courant unidirectionnel, continu, sensiblement sinusoïdal présentant une valeur moyenne ($I_g$), qui est approximativement égale ou supérieure à l'amplitude de crête de la composante alternative du courant de dérivation.

**15.** Procédé selon la revendication 14, **caractérisé en ce qu'**il comporte en outre une surveillance d'au moins une grandeur caractérisant un courant de dérivation ($i_q(t)$) à travers les branches de convertisseur (9a-f), dans lequel la commande et/ou la régulation (S2) des courants de dérivation comportent une régulation des courants de dérivation en fonction de la grandeur surveillée.

**16.** Procédé selon l'une quelconque des revendications 14 et 15, **caractérisé en ce que** la commande et/ou la régulation (S2) des courants de dérivation sont effectuées sur la base d'une augmentation d'une composante de courant continu ($I_g$) d'un courant de dérivation et/ou d'un courant continu intermédiaire.

**17.** Procédé selon l'une quelconque des revendications 14 à 16, **caractérisé en ce que** la commande et/ou la régulation (S2) des courants de dérivation sont effectuées sur la base d'une superposition active d'un courant circulaire de la deuxième harmonique, afin d'atteindre simultanément au moins une des étapes suivantes : adaptation de la tension continue ; modification des rapports entre les courants côté tension continue et tension alternative et les tensions du convertisseur; et/ou minimisation de la tension d'ondulation des condensateurs des sous-modules.

FIG. 1

FIG. 2

FIG. 3

$i_q(t)$

$I_g$

Zeit t

FIG. 4

$i_q(t)$

Zeit t

FIG. 5a

$i_q(t)$

$I_g$

$I_{min}$

Zeit t

FIG. 5b

FIG. 6

FIG. 7

FIG. 8

FIG. 9

FIG. 10

FIG. 11

START

ANSTEUERUNG DER LEISTUNGSHALBLEITERSCHALTER ZUM BETREIBEN DES STROMRICHTERS ZUR SPANNUNGSWANDLUNG — S1

STEUERN/REGELN DER ZWEIGSTRÖME IN STROMRICHTERZWEIGEN, UM KONTINUIERLICHE, UNIPOLARE ZWEIGSTRÖME ZU ERHALTEN — S2

ENDE

FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- DE 102010046142 A1
- DE 102011086087 A1

- EP 1497911 B1
- EP 2782239 A1
- US 20140146583 A1